**Europäisches Patentamt**

**European Patent Office**

**Office européen des brevets**

(19)

(11) Publication number: **0 516 878 B1**

## EUROPEAN PATENT SPECIFICATION

(12)

(45) Date of publication of patent specification: **20.12.95**

(51) Int. Cl.⁶: **A23B 4/027**, A23B 4/10

(21) Application number: **91117130.4**

(22) Date of filing: **08.10.91**

The file contains technical information submitted after the application was filed and not included in this specification

(54) **Process for treating animal carcasses to control bacterial growth**

(30) Priority: **07.06.91 US 712245**
**07.06.91 US 712256**
**07.06.91 US 712260**

(43) Date of publication of application:
**09.12.92 Bulletin 92/50**

(45) Publication of the grant of the patent:
**20.12.95 Bulletin 95/51**

(84) Designated Contracting States:
**AT BE CH DE DK ES FR GB IT LI NL SE**

(56) References cited:
**US-A- 4 075 357**
**US-A- 4 592 892**

(73) Proprietor: **RHONE-POULENC INC.**
**125 Black Horse Lane**
**Monmouth Junction,**
**New Jersey 08852 (US)**

(72) Inventor: **Bender, Fredric G.**
**142 Irwin Street**
**Houston,**
**Pennsylvania (US)**
Inventor: **Brotsky, Eugene**
**5453 Covode Street**
**Pittsburgh,**
**Pennsylvania (US)**

(74) Representative: **Kolb, Helga, Dr. Dipl.-Chem. et al**
**Hoffmann, Eitle & Partner,**
**Patentanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 516 878 B1

**Description**

The present invention relates to an improved process for reducing the level of and retarding the growth of bacteria, such as salmonellae, during processing edible animals and bacterial present on animal carcasses without causing organoleptic depreciation thereof.

Animals including poultry of all types, red meat animals of all kinds, fish and crustaceans and the like are killed and processed for human consumption. Usually inedible parts are removed by evisceration which can cause contamination of the edible portion of the animal with unwanted bacteria. Bacteria, naturally present on and in the animal often remains and may multiply depending on the sanitary conditions employed in processing.

Poultry is processed, after slaughtering, by scalding to assist in defeathering, defeathering usually by machine, washing, eviscerating and chilling prior to packing. These treatments are controlled to avoid causing a change in the appearance or characteristics of the poultry which would make it unsalable.

In processing fish, fish are taken from the ocean or fresh water and eviscerated often with filleting. In this process the fish can become contaminated with certain bacteria or may naturally have such bacteria on the skin. Crustaceans are often just cooked and the shell removed.

Red meat is processed by removing the hide, eviscerating, cooling and cutting into larger cuts for fresh, cured meat or boxed meat. The fresh red meat obtained after evisceration is chilled by hanging the sides of red meat at a temperature usually below 10°C. Beef is hung for a considerable period to allow natural enzymes to tenderize the beef. Pork is simply cooled. For certain primal cuts, such as ham, bacon, corned beef and pastrami the cuts are cured by chilling below 10°C, followed by injection of a solution containing salt, nitrite and/or nitrate, sweetener, cure accelerator, one or more polyphosphates, spices and flavorings. The meat is prepared to 105% to 130% of its weight with curing solution. Boxed meat is cut into primal cuts after chilling, vacuum packaging and boxing.

Animals, after eviscerating, often show high levels of bacteria on the surface of the carcass. A large part of carcass contamination can be removed by water washing. While bacteria can be killed by heat, such as during cooking, colony forming units of bacteria can attach and/or reside in the regular and irregular surfaces of the flesh and skin, multiply and, thereafter, contaminate working surfaces, hands and utensils. Food spoilage and illness can result from this carry over of bacteria or cross-contamination from the infected carcass to surfaces not heated sufficiently to cause thermal destruction of the bacteria.

US-A-4592892 to Ueno et al. discloses an aqueous sterilizing agent for foods which comprises ethanol, an alkali carbonate and a trialkali phosphate all as active ingredients. It is taught that this combination possesses an advantageous synergistic sterilizing effect.

Extensive research has been conducted by the art to uncover economical systems for reducing bacteria contamination of animal carcasses without causing organoleptic depreciation.

A treatment system must be economical, easy to use, compatible with food manufacturing and not change the organoleptic properties of the animal. Any change in the appearance or flavor of the animal would make it unsalable.

Extensive research conducted by the prior art has been unsuccessful in providing a treatment to reduce bacteria levels of animal carcasses without causing extensive organoleptic depreciation.

The invention provides an animal carcass wash process which removes or reduces existing bacterial contamination, as well as retards further contamination or growth without affecting the organoleptic properties of the poultry carcasses.

In accordance with the present invention, there is provided a process for treating animal carcasses to remove or retard bacterial growth, without affecting the organoleptic properties of the animal carcasses.

More particularly, the present invention relates to a process for treating the surface of the animal carcass with an aqueous treatment solution having a pH of 11.5 or greater, said solution containing trialkali metal orthophosphate present in an amount effective to remove, reduce or retard bacterial contamination and/or growth with the proviso that the orthophosphate solution does not contain alcohol.

It has been discovered that during processing from about 4% or more, and up to saturation, preferably 8% or more, trialkali metal orthophosphate may be added to processing water at any point in the process to elevate the treating solution to above pH 11.5 and remove, reduce or retard bacterial contamination and/or growth on the surface of the animal carcass. In processing, we prefer to use the aqueous phosphate water solution to surface treat the animal carcass at places in the treatment process where the treatment solution can be filtered and recycled with make up water to maintain the orthophosphate concentration at above about 4% and the pH above 11.5.

For poultry, we prefer to employ the trialkali orthophosphate treatment immediately after the scalding treatment either before or after defeathering or during washing of the poultry prior to evisceration or preferably during the inside/outside wash after evisceration. These treatments are conducted using a hot solution and recycling the solution with filtering to economically utilize the phosphate. We most prefer, however, to treat the poultry after the chill tank particularly using an inside/outside wash. After the chill tank, we treat with a cold orthophosphate solution generally below 10°C. It is also possible to treat the poultry after cutting and prior to packaging with cold orthophosphate solution.

For red meat, the process comprises surface treating the red meat carcasses, preferably prior to rigor, by contacting the surfaces with a solution of trialkali orthophosphate above pH 11.5 without appreciably changing the color of the meat by causing a darkening of the muscle tissue resulting from high pH. By contacting the red meat prior to rigor, however, lactic acid produced during rigor partially or totally neutralizes the trisodium orthophosphate and further reduces any adverse pH effect on color. Alternatively, a water and/or acid wash may be employed to neutralize any orthophosphate remaining on the surface after treatment.

The treatment is preferably conducted during slaughter either prior to or after chilling by dipping or preferably spraying the orthophosphate solution onto all surfaces of the carcass for several minutes. Preferable treatment is done before rigor on set.

In treating raw fish and/or crustaceans, we treat the surface of the fish, just after evisceration with a treatment solution above pH 11.5 which comprises about 3%, preferably from about 4% to saturation of a solution of the alkali metal orthophosphate, for a period of time effective to reduce, remove or retard the growth of seafood microorganisms.

It is possible, but not necessary, to treat the animal with a blend of a major amount of trialkali metal orthosphosphate and a corresponding minor amount of a basic agent, said blend being present in an amount and said poultry being treated for a time sufficient to remove, reduce or retard bacteriological contamination and/or growth on the animal carcass. The basic agent is used in the blend in amounts insufficient to cause substantial organoleptic depreciation of the poultry. The trialkali metal orthophosphate is always present per se or in a major amount of the treatment solution with the proviso that alcohol is never part of the treatment solution.

It has been found that treatment with the trisodium or tripotassium orthophosphate gave essentially the same effectiveness as sodium hydroxide or phosphoric acid/sodium hydroxide without the adverse effects on the meat or skin which accompany the use of the sodium hydroxide or phosphoric acid/sodium hydroxide blend.

By the use of this process, animal carcasses can be washed economically and simply with food grade products to achieve bacteria control without organoleptic depreciation of the carcass. Phosphate salts can remain on the animal surface to provide a surface less conducive to supporting bacterial growth, particularly in the highly irregular surfaces of the skin without fear of carcass degradation or impairment of flavor.

Other benefits will become apparent from the description which follows.

Trialkali metal phosphate is an orthophosphate salt of the formula $R_3PO_4$ with a formula for the sodium salt being $Na_3PO_4$ and an equivalent formula for the tripotassium compounds. R is an alkali metal of sodium or potassium.

Trisodium phosphate is also available as the dodecahydrate of the formula:

$$Na_3PO_4 \cdot 12H_2O$$

In commerce, the dodecahydrate is available in a technical grade with a formula of:

$$5(Na_3PO_4 \cdot 12H_2O) \text{ NaOH};$$

or in the food grade with a formula of:

$$4(Na_3PO_4 \cdot 12H_2O) \text{ NaOH}.$$

Preferably, the trisodium phosphate dodecahydrate (either form) is used. As used herein, trisodium phosphate is intended to include tripotassium phosphate as well as all forms of those compounds. Food grade products are intended to be used for food uses.

The invention is applicable to any edible animal material which is not vegetable or mineral and can include poultry, fish and crustaceans and red meat animals. By carcass, herein, we mean the edible remains of any dead animal.

The invention is applicable to all types of poultry including chickens, turkeys, geese, capon, cornish hens, squab, ducks, guinea, fowl and pheasants.

The invention is applicable to fish or crustacean from salt or fresh water either in whole, eviscerated, or filleted condition including bony and cartilaginous fish such as flounder and shark respectively; fresh water fish such as trout; salt water fish such as grouper; mixed water fish such as salmon and the like. Fishes also includes aqua cultural fish such as catfish.

Crustaceans that can be treated include crayfish, prawns, crabs and lobsters both aquacultural and wild and caught from either a fresh, brackish or salt water habitat. Fish and crustaceans also include bivalve shellfish such as scallops, oysters and mussels, as well as, mullusks such as conch. Also included are other marine species such as squid.

The invention is also applicable to any red meat including pork, beef, veal, mutton, lamb and goat either whole carcass or fresh parts, preferably before rigor and at least treated before appreciable color change is evident from the treatment.

The application of an aqueous trialkali orthophosphate solution of pH greater than 11.5 can be made at any point during processing. We prefer, however, to employ the orthophosphate solution in a manner which allows recovery of the solution after treating the animal. The recovered solution is then filtered to remove insolubles and water and trialkali metal orthophosphate added to maintain the concentration at an effective amount. The animal carcass can either be subjected to contact with the treatment solution in a trough or may be subjected to solution sprayed inside and outside the carcass depending on where in the process treatent is made. The animal may be treated at several points in the process. For fish or crustaceans it is possible to treat at point of catch using fresh or seawater having the orthophosphate added thereto.

It is possible to employ a trough through which the animal is transported by chain shackles usually a 5 second to 30 minute dip or a spray through nozzles for from several seconds to minutes usually 2 seconds to 15 minutes, usually, less than 30 seconds. Residual treatment solution remains after the actual contact with the animal and such residual solution is further effective in removing, reducing or retarding bacterial contamination and/or growth.

For poultry, while processing treatment can be conducted at various places in the treatment process, we prefer several places where we can minimize the quantity of treatment solution employed, minimize the treatment time to that effective to produce the desired removal, reduction or retardation of bacteriological growth and/or contamination of the poultry. After scalding the poultry during feather removal we have found we may treat the poultry in a trough for a minimum of several seconds at a temperature of about 50°C-60°C prior to the singe step of processing. This helps reduce bacterial contamination. The treatment solution is removed in the subsequent washing step prior to evisceration. While it is possible to treat with orthophosphate during washing, the large quantity of water employed and regulations regarding the recycling of wash water preclude economical treatment. However, treatment is possible either directly after washing and before evisceration or after evisceration, preferably employing a spray treatment solution at a temperature between 20°C to 45°C. When treating after evisceration, it is possible to spray the treatment solution on the outside as well as the inside of the eviscerated poultry. Treatment can take several seconds or longer with the treatment solution remaining on the poultry until its introduction into the chill tank. It is also possible to employ a post chill treatment with trialkali orthophosphate solution maintained at below 27°C, preferably below 10°C. The solution may be applied in a trough or tank but is preferably sprayed on the inside and outside of the poultry. The treatment solution is then recovered and recycled while solids are removed using filters and make up water and phosphate added to maintain orthophosphate concentration.

Red meat is treated with trialkali metal orthophosphate. For cured meat the meat is treated prior to pumping cuts of meat with salts, nitrate and the like. The trialkali metal phosphate treatment prevents bacteria from being driven into the meat during pumping which could result in later spoilage. By treating the surface first with orthophosphate any bacteria are removed or controlled prior to the pumping operation.

Immediately after treatment the meat can be processed by usual meat processing techniques.

If a high level of orthophosphate is present which could cause discoloration, then the red meat must be treated with water and/or a dilute acid to adjust the meats pH. However, if treated before rigor, the lactic acid generated from rigor assists in controlling the browning of the muscle meat.

We have found the trialkali metal orthophosphate is effective against salmonella, campylobactar, listeria, spoilage bacteria and the like.

The treatment solution preferably contains only trialkali metal orthophosphate as the means to control, reduce, retard or remove bacteria. No alcohol, nitrate or nitrite, or ascorbic acid is employed in the treatment solution for purposes of enhancing the effect of the orthophosphate. The treatment solution may contain other ingredients for water binding, cleaning, flavoring, coloring and the like. Salts may be used, including chlorides and the like. Normally, except in pumping solutions, other phosphates are not combined with the orthophosphates.

4

EP 0 516 878 B1

Fish and crustaceans can be treated with the trialkali metal orthophosphate at any stage of processing, such as during shell, skeleton, head, viscera, scale or skin removal or prior to, during or after freezing, refrigeration, icing, ice glazing, cooking or pasteurization. Preferably the fish and crustaceans are treated either just after catch on the fishing boat or shortly after arrival at the processing plant prior to cooking or packaging.

After the fish or crustacean is caught it is eviscerated, often skinned or filleted and washed with water or other acceptable cleaning solutions. Agitation, may be applied to assist washing. Before, concurrent with or after the washing the fish or crustaceans are treated with a treatment dispersion or preferably a solution containing about 3% preferably from about 4% to saturation of trialkali metal orthophosphate. The fish or crustaceans can be dipped in the treatment solution with agitation to insure contact of the treatment solution with all surfaces and crevices of the fish. The treatment solution is preferably applied by mechanical sprayers, under high pressure to insure good contact of treatment solution with the fish surface.

The treatment solution preferably contains only trialkali metal phosphate as the means to control, reduce, retard or remove bacteria. No alcohol, ascorbic acid or other phosphates except those present in salt water at about the concentration present in salt water are employed in the treatment solution. The treatment solution may contain other ingredients for preservation, water holding, cleaning, flavoring, coloring, including salts such as sodium and potassium chlorides and the like. Often the solution may be prepared from salt water. In the treating the fish or crustaceans, the solution comprises trialkali metal orthophosphate with the proviso that it contains no alcohol, ascorbic acid or other phosphates.

The treatment solution for all animals preferably contains the orthophosphate in an amount sufficient to provide and maintain a pH above about 11.5 and preferably within a range from 11.6 to 13.5 and most preferably from pH 12.0 to 13.5.

We have found that trace amounts of the treatment solution can remain on the animal carcass (a few hundredths of a percent) to further remove, reduce or retard bacterial contamination and/or growth on the carcass surface. A further treatment can be made after cutting and prior to packaging of the animal using either a spray or dip process.

We have found that anywhere from several seconds to hours of treatment is effective in removing, reducing or retarding bacterial contamination. The time need only be an effective amount of time to produce the desired result and can easily be determined for this particular point in the process where treatment is conducted.

At atmospheric pressure, in a tank or other dipping device, dwell times at 5 seconds to about 30 minutes are effective while dwell times using a spray range from several seconds to several minutes or 2 seconds -15 minutes with spray times of less than 30 seconds preferred.

A high pH maintained at over 11.5 preferably 12.0 or greater is critical to remove, reduce, retard or control bacterial contamination and/or growth. The mechanism is not entirely understood but the orthophosphate treatment appears to improve bacteria removal as well as retarding growth of any residual bacteria.

Equipment for recycling and removing solids is generally available from manufactures of meat pickling equipment. In general, a rotary filter manufactured by Townsend of Des Moines, Iowa can be used to remove large particles while a screening system also available from Townsend can be used for smaller particle removal. The equipment should be made for stainless steel, plastic or other material resistant to the corrosive action of trialkali metal orthophosphate.

We prefer to employ solutions of the orthophosphate which are highly effective in removing, reducing or retarding bacterial contamination. Saturated solutions of up to 40% are possible but usually from about 4%, preferably about 8% or greater up to saturation of trisodium orthophosphate is effective. The phosphate may be combined with other materials if desired with the proviso that alcohols (ethanol or the like) reducing agents like ascorbic acid other phosphates with fish and nitrates and nitrites with red meat are not employed. We do not employ any antibacterial which are detrimental to the organoleptic properties of the animal such as high concentrations of sodium hydroxide or other harsh alkali or alcohol. We prefer to employ the trialkali metal phosphate per se to treat the carcass. Dispersions of orthophosphate can be used but appear to have little advantage over use of a solution for treating the carcass.

Where the animal is treated just prior to packaging, it is possible to treat with orthophosphate combined with other materials so long as alcohol is not present. In processing before or after evisceration but before cutting, we prefer to employ trialkali metal orthophosphate per se or at least with the proviso that alcohol is not employed.

In spraying the treatment solution on the animal we employ from 20 to 150 psi to cause a spray of medium particle size to impact the inside and outside of the carcass with sufficient force for good cleaning without any depreciation on the appearance or taste of the animal.

5

The treatment solution is preferably comprised only of trialkali metal orthophosphate. For purposes of adjusting pH, minor amounts of other agents can also be added. These can be illustrated by sodium carbonate, sodium an/or potassium hydroxide, alkali metal polyphosphate such as, sodium tripolyphosphate or acids such as phosphoric acid. Since hydroxides have an adverse effect on the organoleptic characteristics of animal flesh, it is preferred to avoid the use of these basic agents altogether or to use amounts which have no effect on the organoleptic characteristics of the flesh. The basic agent, if used, is used in an amount insufficient with the alkali metal orthophosphate to cause organoleptic deterioration of the flesh. By "minor amounts" is meant less than 50% by weight, preferably less than 45% of the combined dry weight of the trialkali metal orthophosphate and the basic agent and in all cases in an amount insufficient to cause organoleptic deterioration.

At all levels of about 4% or more trialkali orthophosphate, the pH is maintained above about 11.5 and preferably from pH 11.6 to about 13.5, most preferably 12.0-13.5.

The treatment is conducted under good animal processing conditions. Cool temperatures and cool treatment solutions are used after chilling the eviscerated animal to avoid undue deterioration of the carcass. The treatment solution temperature is preferably less than 27°C, more preferably less than 10°C.

The carcasses are contacted with the treatment solution for a period of time sufficient to reduce bacterial contamination over and above that obtainable with pure water. Treatment dwell time is also sufficient, under the conditions of the treatment, to contact all contactable exposed surfaces of the carcasses, effect a washing of the surfaces and thus contact substantially all colony forming units on the surface of the carcass. The contact time is sufficient to allow upon drying, the deposition of an even layer of trialkali metal orthophosphate on the exposed surfaces of the carcass to prevent or retard further bacterial growth.

At atmospheric pressure, in a dip tank, dwell times ranging from a few seconds such as two or more seconds after about 30 minutes, where processing conditions permit, have been found to be effective. Dwell times can be reduced using a pressure spray to 2 seconds to 15 minutes. Longer dwell times can be used if the solution concentration is not excessive.

Pressure spraying is particularly useful when both the inside and outside of the eviscerated animal such as poultry can be treated. We employ a rotating nozzle for the inside spray and insert the nozzle fully into the cavity resulting from evisceration so that all parts of the exposed flesh, tissue and bone is contacted with a spray of treatment solution. Outside sprays are designed to cover the total outside of the carcass. Where possible we allow the treatment solution to remain on the surface to further reduce, remove or retard bacterial contamination and/or growth. Often we allow the solution to dry on the surface to further reduce, remove or retard bacterial growth.

The spray is propelled using from 20 to 150 psi pressure through spray nozzles designed to vigorously wash the surface without damaging the meat.

When using dip tanks or troughs the animal is generally dipped in or pulled through the solution. Although this method, which permits the phosphate treatment solution to contact the entire surface is suitable, agitation in such tanks will improve contact and normally reduces the time of contact required for good results.

Immediately after treatment, the carcass can be processed following normal processing conditions such as draining and chilling. A unique feature of the invention is the ability to allow the trialkali metal phosphate to dry on the surface of the carcass without the need to wash. The residual phosphate left on the animal particularly poultry surface provides reduced bacteriological activity particularly in the cracks and pockets of the skin and flesh.

It is possible to treat the animal at any point in the process and at any temperature and time which does not harm the product. One or more treatments with the alkali metal orthophosphate during processing are possible and often desirable. Any treatment temperature from 0-70°C for process times of several seconds to hours depending on the temperature is feasible.

In treating poultry the orthophosphate solution may be applied after scalding and before defeathering, treatment provides a means of washing undesired contamination including bacterial contamination from the poultry, as well as, providing a coating of treatment solution on the poultry as it is exposed to defeathering where further bacterial contamination can occur. This treatment is conducted at 40-70°C, preferably 45-65°C for a short period of time.

It is also possible to treat the poultry after defeathering and before evisceration although we prefer to treat after evisceration where both the inside and outside of the poultry may be thoroughly sprayed with treatment solution at 20°-40°C, preferably 25-35°C and allow the treatment solution to remain on the bird entering the chill equipment.

It is also preferred to treat the poultry post-chilling with a treatment spray inside and outside of the poultry. This step helps remove any undesired material present in the chill tank and treats any additional bacteria which may have contacted the poultry in the chill tank. Again, we prefer to allow the solution to remain on the poultry including cutting and after packaging. Where cutting of the processed poultry is done, we can treat the cut poultry with trialkali metal orthophosphate solution and then wash the poultry or pack the parts as is.

Leaving the treatment solution on the carcass provides a further opportunity to remove, reduce or retard bacterial contamination and/or growth on the surface including packaged animal flesh.

While the present invention is primarily directed at reducing salmonella contamination of meat, it is also intended to include all bacterial growth which is affected by the stated trialkali metal orthophosphates. In poultry this includes E. coli, Entarobacteriacae, campylobacter; on fish and crustaceans Pseudomonus aeruginosa, Bacillus cereus, Moraxella osbersis, and for red meat campylobacter and listeria. In addition to salmonellae, spoilage bacteria and other bacteria which are measured by total plate count are significantly reduced.

Affected bacterial species can be easily determined by one of ordinary skill and thus all such bacteria as are affected are considered included in the invention.

The present invention will be illustrated in the Examples which follow. The poultry used in the Examples 1-13 are conventional chicken broiler stock weighing dressed from about 0.9 to about 1.1 kilograms.

## EXAMPLES 1-6

Grade A broilers from a processing plant after rinsing and before being chilled in the chill tank were packed in coolers with "$CO_2$ snow", transported, separated and placed on ice and kept in a 1.1°C (34°F) cooler overnight. The birds were dipped for 1 minute in an inoculum of $10^7$ - $10^8$ CFU/ml of a freshly grown nalidixic acid resistant strain of Salmonella typhimurium harvested from BHI broth and then allowed to drain for a specific time. After the allotted draining time, 5 broilers were submerged and agitated in each treatment solution for a specified dwell time. Each agent was placed in a separate tared clean plastic container. Water and ice were added until 20.4 kilograms was obtained with a temperature of approximately 7.2°C (45°F) One inoculated broiler was immersed in water as control and one inoculated bird was retained without washing as a control.

After treatment, the birds were individually placed in Cryovac plastic bags and were either analyzed immediately (two birds plus the inoculated control) or placed in a 2.2°C (36°F) incubator to determine the effect of treatment after storage. Two broilers were analyzed for each treatment after 5 and 8 days storage at 2.2°C (36°F). Thus seven birds were used for each treatment. The following conditions were used:

TABLE I

| Example | Treatment Agent | Amount /20.4 Kg | Inoculum Drain Time | Treatment Dwell Time |
|---------|-----------------|-----------------|---------------------|----------------------|
| 1 | $Na_3PO_4$ | 2.4 kg | 2 minutes | 30 seconds |
| 2 | $Na_3PO_4$ | 0.78 kg | 1 hour | 15 minutes |
| 3 | $Na_3PO_4$ | 1.6 kg | 2 minutes | 15 minutes |
| 4 | $Na_3PO_4$ | 1.59 kg | 1 hour | 15 minutes |
| 5 | 50% $Na_3PO_4$ *50% STP | 1.59 kg | 1 hour | 15 minutes |
| 6 | Water | 0.0 | 2 minutes | 15 minutes |

* STP means sodium tripolyphosphate

## ENUMERATION OF NALIDIXIC ACID-RESISTANT SALMONELLA

Nalidixic acid-resistant salmonellae were enumerated using the whole carcass wash procedure as prescribed by the National Broiler Council. Each bird was weighed and the resulting weight was divided by 3.8 to determine the number of ml of lactose broth plus 0.6% tergitol to be added to the bag. The bird, broth, and bag were shaken for 1 minute through an arc of 2 ft in a manner assuring that the broth flowed through the abdominal cavity and over the entire surface of the carcass. Serial dilutions of this broth in Butterfield's buffer were plated using the pour plate procedure with MacConkey's agar with 100 ppm nalidixic acid added. These plates were incubated for 48 hours at 35°C then counted. Nalidixic acid-resistant colonies were selected and confirmed as Salmonella using FDA Bacteriological Analytical Manual (BAM) Procedures.

As a backup procedure to assure recovery of sublethally injured nalidixic acid-resistant salmonella, a 10 ml aliquot of the lactose broth, 0.6 percent tergitol carcass wash was pipetted into a sterile culture tube and incubated for 24 hours at 35°C. In the event that no growth occurred on the MacConkey Agar/nalidixic acid plates, the backup wash was examined for the presence of salmonellae using FDA BAM procedures.

The results achieved are shown in Table II which follows. The data for storage at 2.2°C (36°F) for 0, 5 and 8 days, is compared to an inoculated control which has been washed only with water.

TABLE II

Efficacy[a] of Treatments of Examples 1 through 6 against a nalidixic acid-resistant Salmonellae typhimurium inoculated onto fresh broiler carcasses.

| 2.2°C (36°F) Storage Time (Days) | | Duplicate A | Duplicate B | Mean CFU per ml[a] | Log CFU per ml | Pct. Reduction |
|---|---|---|---|---|---|---|

---CFU per ml[a]---

Duplicates

| Example 1 | | | | | | |
|---|---|---|---|---|---|---|
| 0 | a | $1.9 \times 10^5$ | $7.7 \times 10^2$ | $8.4 \times 10^4$ | 4.92 | 99.2 |
|   | b | $6.8 \times 10^4$ | $1.0 \times 10^3$ | | | |
| 5 | a | $3.2 \times 10^3$ | $6.4 \times 10^3$ | $7.4 \times 10^3$ | 3.87 | 99.9 |
|   | b | $8.2 \times 10^3$ | $5.6 \times 10^3$ | | | |
| 8 | a | $8.1 \times 10^3$ | $9.0 \times 10^3$ | $8.1 \times 10^3$ | 3.91 | 99.9 |
|   | b | $8.7 \times 10^3$ | $6.4 \times 10^3$ | | | |
| Untreated Control | - | $1.0 \times 10^7$ | $1.1 \times 10^7$ | $1.1 \times 10^7$ | 7.04 | -- |

| Example 2 | | | | | | |
|---|---|---|---|---|---|---|
| 0 | a | $9.0 \times 10^1$ | $7.0 \times 10^4$ | $6.3 \times 10^4$ | 4.80 | 99.5 |
|   | b | $5.0 \times 10^1$ | $1.8 \times 10^5$ | | | |
| 5 | a | $2.0 \times 10^4$ | $9.6 \times 10^3$ | $1.4 \times 10^4$ | 4.14 | 99.9 |
|   | b | $1.9 \times 10^4$ | $6.4 \times 10^3$ | $6.4 \times 10^3$ | | |
| 8 | a | $7.8 \times 10^3$ | $2.2 \times 10^4$ | $1.6 \times 10^4$ | 4.19 | 99.9 |
|   | b | $7.7 \times 10^3$ | $2.5 \times 10^4$ | | | |
| Untreated Control | - | $1.2 \times 10^7$ | $1.2 \times 10^7$ | $1.2 \times 10^7$ | 7.08 | -- |

| Example 3 | | | | | | |
|---|---|---|---|---|---|---|
| 0 | a | $1.0 \times 10^2$ | $1.3 \times 10^2$ | $8.3 \times 10^1$ | 1.92 | 99.999 |
|   | b | $3.0 \times 10^1$ | $7.0 \times 10^1$ | | | |
| 5 | a | $5.7 \times 10^2$ | $1.4 \times 10^3$ | $2.4 \times 10^3$ | 3.38 | 99.98 |
|   | b | $3.8 \times 10^2$ | $7.2 \times 10^3$ | | | |
| 8 | a | $2.2 \times 10^3$ | $3.3 \times 10^3$ | $3.2 \times 10^3$ | 3.51 | 99.98 |
|   | b | $1.9 \times 10^3$ | $3.3 \times 10^3$ | | | |
| Untreated Control | - | $1.5 \times 10^7$ | $1.5 \times 10^7$ | $1.5 \times 10^7$ | 7.18 | -- |

8

## Example 4

| | | | | | | |
|---|---|---|---|---|---|---|
| 0 | a | $2.0 \times 10^1$ | $1.8 \times 10^2$ | $8.5 \times 10^1$ | 1.93 | 99.999 |
|   | b | $6.0 \times 10^1$ | $8.0 \times 10^1$ | | | |
| 5 | a | $2.1 \times 10^3$ | $8.8 \times 10^3$ | $3.4 \times 10^3$ | 3.53 | 99.98 |
|   | b | $2.6 \times 10^3$ | $1.2 \times 10^2$ | | | |
| 8 | a | $9.0 \times 10^2$ | $1.8 \times 10^3$ | $1.3 \times 10^3$ | 3.11 | 99.99 |
|   | b | $1.1 \times 10^3$ | $1.3 \times 10^3$ | | | |
| Untreated Control | - - | $1.9 \times 10^7$ | $1.3 \times 10^7$ | $1.6 \times 10^7$ | 7.20 | -- |

## Example 5

| | | | | | | |
|---|---|---|---|---|---|---|
| 0 | a | $3.0 \times 10^1$ | $6.0 \times 10^1$ | $3.3 \times 10^1$ | 1.51 | 99.999 |
|   | b | $1.0 \times 10^1 (+) 4.0 \times 10^1$ | | | | |
| 5 | a | $2.1 \times 10^3$ | $4.3 \times 10^3$ | $2.6 \times 10^3$ | 3.41 | 99.98 |
|   | b | $1.6 \times 10^3$ | $2.4 \times 10^3$ | | | |
| 8 | a | $2.0 \times 10^3$ | $4.9 \times 10^2$ | | | |
| Untreated Control | - - | $1.0 \times 10^7$ | $1.1 \times 10^7$ | $1.1 \times 10^7$ | 7.04 | -- |

## Example 6

| | | | | | | |
|---|---|---|---|---|---|---|
| 0 | a | $7.9 \times 10^5$ | $5.9 \times 10^5$ | $7.4 \times 10^5$ | 5.87 | 90.9 |
|   | b | $1.0 \times 10^6$ | $5.7 \times 10^5$ | | | |
| 5 | a | $4.1 \times 10^5$ | $6.5 \times 10^5$ | $5.2 \times 10^5$ | 5.72 | 93.6 |
|   | b | $4.3 \times 10^5$ | $5.9 \times 10^5$ | | | |
| 8 | a | $3.1 \times 10^5$ | $4.0 \times 10^5$ | $4.0 \times 10^5$ | 4.60 | 95.1 |
|   | b | $4.3 \times 10^5$ | $4.5 \times 10^5$ | | | |
| Untreated Control | - - | $5.2 \times 10^6$ | $1.1 \times 10^7$ | $8.1 \times 10^6$ | 6.91 | -- |

a= Colony Forming Units per ml of carcass wash.
(+) Back up confirmed positive for nalidixic acid-resistant salmonellae.

## DISCUSSION OF RESULTS

The inoculum suspension averaged $1.6 \times 10^8$ CFU per ml nalidixic acid-resistant <u>Salmonella typhimurium</u>. Uninoculated, untreated control broilers averaged 380 nalidixic acid-resistant salmonellae per ml. This number is considered insignificant in light of the inoculum level used in the experiment. Untreated inoculated controls averaged $1.2 \times 10^7$ CFU per ml nalidixic acid-resistant salmonellae.

Treatment of inoculated carcass with water wash only (Example 6) gave reductions of 90.9 to 95.1 percent (approximately 1 log-cycle). Therefore, the water rinse by itself removed approximately 90 percent of the nalidixic acid-resistant salmonellae.

The treatments of Examples 1 and 2 both gave reductions in the 99 to 99.9 percent range (2 to 3 log cycles). Thus the higher concentration and short dwell time of the treatment of Example 1 was approximately equivalent to the lower concentration longer dwell time of the treatment of Example 2.

The treatments of Examples 3 and 4 both gave 99.999 percent (5 log cycle) reductions immediately after treatment (Time 0) as compared to inoculated untreated controls. However, reductions were 99.98 or 99.99 (approximately 4 log cycles) for samples stored for 5 or 8 days at 3.3 °C (38 °F). This may indicate

9

that injured cells not recovered by plating immediately after treatment may be able to effect repair during refrigerated storage. The increased recovery numbers do not indicate growth since salmonellae will not grow at temperatures less than 7.2°C (45°F).

The treatment of Example 5 gave a reduction of 99.9998 (nearly 6 log-cycles) immediately after treatment. Again, there was increased recovery of nalidixic acid-resistant salmonellae at 5 and 8 days compared to immediately after treatment.

EXAMPLES 7-13

Broilers randomly selected from the chill tank and transported on wet ice were treated as in Example 1. Seven treating solutions were prepared, 3 as per the invention and 4 controls. Eleven chickens were dipped at one time in the inoculum for 1 minute and allowed to drain for a specific time. Ten of these broilers were submerged in a specific agent for the time given in Table III. One inoculated broiler was retained as an inoculated untreated control. The birds were placed in Cryovac bags and stored as in Example 1. Duplicate broilers were analyzed for each treatment after 5 and 7 days storage at 2.2°C (36°F) and after 3 and 5 days storage at 12.8°C (55°F). Enumeration of salmonellae was as described in Example 1. The following conditions were used:

TABLE III

| Example | Treatment Agent | Amount /20.4 Kg | Conc. | Inoculum Drain Time | Treatment Dwell Time (Minutes) |
|---|---|---|---|---|---|
| 7 | $Na_3PO_4$ | 2.45 kg | 12% | 2 minutes | 2.0 |
| 8 | $Na_3PO_4$ 1. | 6 kg | 8% | 1 hour | 15.0 |
| 9 | $Na_3CO_3$ | 1.6 kg | 8% | 1 hour | 15.0 |
| 10 | NaOH | 0.2 kg | 1% | 1 hour | 15.0 |
| 11* | 75% $H_3PO_4$ | 0.54 kg | 2.6% | 1 hour | 7.5 |
|  | 25% NaOH | 0.41 kg | 2% | 1 hour | 7.5 |
| 12* | 75% $H_3PO_4$ | 0.54 kg | 2.6% | 1 hour | 7.5 |
|  | 25% $Na_2CO_3$ | 1.63 kg | 8% | 1 hour | 7.5 |
| 13 | Water | - | - | 2 minutes | 15.0 |

* Examples 11 and 12 were run using two separate baths and two separate dwell times as listed.

The results are shown in Table IV.

### TABLE IV

Efficacy of treatments of Examples 7 through 13 against a nalidixic acid-resistant _Salmonella typhimurium_ inoculated onto fresh broiler carcasses held at 2.2°C.

| Treatment | 2.2°C Storage Time (days) | Replicates B | | Mean CFU per ml | Log CFU per ml | Pct. Reduction |
|---|---|---|---|---|---|---|
| | | ----CFU per ml[a]---- | | | | |
| **Example 7** | | | | | | |
| | 0 | $2.05 \times 10^3$ | $1.21 \times 10^3$ | $1.6 \times 10^3$ | 3.20 | 99.997 |
| | 5 | $3.35 \times 10^5$ | $6.85 \times 10^4$ | $2.0 \times 10^5$ | 5.30 | 99.69 |
| | 7 | $1.35 \times 10^4$ | $5.5 \times 10^3$ | $9.5 \times 10^3$ | 3.98 | 99.985 |
| Untreated Control | 0 | $6.45 \times 10^7$ | - | $6.5 \times 10^7$ | 7.81 | |
| **Example 8** | | | | | | |
| | 0 | $3.15 \times 10^2$ | $7 \times 10^1$ | $1.92 \times 10^2$ | 2.28 | 99.9993 |
| | 5 | $1.9 \times 10^5$ | $0 \times 10^2$ | $1.92 \times 10^5$ | 5.28 | 99.366 |
| | 7 | $3.9 \times 10^6$ | $1.75 \times 10^6$ | $2.83 \times 10^6$ | 6.45 | 90.66 |
| Untreated Control | 0 | $3.0 \times 10^7$ | - | $3.0 \times 10^7$ | 7.48 | |
| **Example 9** | | | | | | |
| | 0 | $6.3 \times 10^3$ | $3.8 \times 10^2$ | $3.3 \times 10^3$ | 3.52 | 99.991 |
| | 5 | $4.4 \times 10^3$ | $7.5 \times 10^2$ | $2.6 \times 10^3$ | 3.41 | 99.993 |
| | 7 | $1.5 \times 10^1$ | $2.6 \times 10^2$ | $1.4 \times 10^2$ | 2.14 | 99.9996 |
| Untreated Control | 0 | $3.75 \times 10^7$ | - | $3.8 \times 10^7$ | 7.57 | |
| **Example 10** | | | | | | |
| | 0 | $7.0 \times 10^1$ | $4.25 \times 10^2$ | $2.5 \times 10^2$ | 2.39 | 99.9997 |
| | 5 | $2.75 \times 10^7$ | $8.4 \times 10^7$ | $5.6 \times 10^7$ | 7.75 | 42.27 |
| | 7 | $8.95 \times 10^4$ | $3.75 \times 10^6$ | $1.9 \times 10^6$ | 6.28 | 98.04 |
| Untreated Control | 0 | $9.7 \times 10^7$ | - | $9.7 \times 10^7$ | 7.99 | - |

Example 11

| | | | | | |
|---|---|---|---|---|---|
| 0 | $1.0 \times 10^1$ | $6 \times 10^1$ | $3 \times 10^1$ | 1.477 | 99.999 |
| 5 | $1.34 \times 10^7$ | $4.1 \times 10^7$ | $2.7 \times 10^7$ | 7.43 | 35.71 |
| 7 | $1.35 \times 10^3$ | $5.45 \times 10^3$ | $3.4 \times 10^3$ | 3.53 | 99.9919 |

Untreated
Control   0   $4.2 \times 10^7$   -   $4.2 \times 10^7$   7.62   -

Example 12

| | | | | | |
|---|---|---|---|---|---|
| 0 | $5.55 \times 10^3$ | $1.7 \times 10^3$ | $3.6 \times 10^3$ | 3.56 | 99.987 |
| 5 | $1.6 \times 10^6$ | $1.35 \times 10^6$ | $1.5 \times 10^6$ | 6.19 | 94.83 |
| 7 | $1.3 \times 10^3$ | $3.7 \times 10^5$ | $1.9 \times 10^5$ | 5.27 | 99.34 |

Untreated
Control   0   $2.85 \times 10^7$   -   $2.9 \times 10^7$   7.45   -

Example 13

| | | | | | |
|---|---|---|---|---|---|
| 0 | $4.0 \times 10^6$ | $1.25 \times 10^6$ | $2.6 \times 10^6$ | 6.42 | 92.777 |
| 5 | $1.55 \times 10^8$ | $1.65 \times 10^8$ | $1.6 \times 10^3$ | 8.20 | no reduction |
| 7 | $2.05 \times 10^6$ | $8.65 \times 10^5$ | $1.5 \times 10^6$ | 6.16 | 95.83 |

Untreated
Control   0   $3.6 \times 10^7$   -   $3.6 \times 10^7$   7.56   -

The untreated controls were prepared by dipping the carcass in inoculum and draining for the same period as the treated sample. The enumeration of nalidixic acid-resistant salmonellae was conducted without storage.

## TABLE V

Percentage reductions of nalidixic acid-resistant salmonellae due to various treatments[i] followed by storage at 2.2°C for 0, 5, and 7 days. Compiled from Table IV.

| Time (Days) | 0 | 0 | 0 | 0 | 0 | 0 | 0 |
|---|---|---|---|---|---|---|---|
| Example | 10 | 8 | 11 | 7 | 9 | 12 | 13 |
| Pct. Reduction | 99.9997 | 99.9993 | 99.9990 | 99.997 | 99.991 | 99.987 | 92.777 |
| Time (Days) | 5 | 5 | 5 | 5 | 5 | 5 | 5 |
| Example | 9 | 7 | 8 | 12 | 10 | 11 | 13 |
| Pct. Reduction | 99.993 | 99.69 | 99.366 | 94.83 | 42.27 | 35.71 | - |
| Time (Days) | 7 | 7 | 7 | 7 | 7 | 7 | 7 |
| Example | 9 | 11 | 7 | 12 | 10 | 13 | 8 |
| Pct. Reduction | 99.9996 | 99.9919 | 99.985 | 99.34 | 98.04 | 95.83 | 90.66 |

[i]Treatments listed in descending order of effectiveness for a given storage time.

## TABLE VI

| Efficacy of treatments of Examples 7 through 13 against a nalidixic acid-resistant Salmonella typhimurium inoculated onto fresh broiler carcasses held at 12.8°C. | | | | | |
|---|---|---|---|---|---|
| Example | 12.8°C Storage Time (days) | Replicates Mean of 2 dup. CFU per ml. | | Mean CFU per ml | Log CFU per ml | Pct. Reduction |
| 7 | 3 | $2.9 \times 10^5$ | $2.9 \times 10^5$ | $2.9 \times 10^5$ | 5.46 | 99.55 |
|  | 5 | $6.85 \times 10^2$ | $2.45 \times 10^6$ | $1.2 \times 10^6$ | 6.09 | 98.15 |
| 8 | 3 | $6.95 \times 10^4$ | $1.9 \times 10^4$ | $4.4 \times 10^4$ | 4.65 | 99.85 |
|  | 5 | $1.02 \times 10^6$ | $2.05 \times 10^2$ | $5.1 \times 10^5$ | 5.71 | 98.3 |
| 9 | 3 | $2.35 \times 10^2$ | $3.95 \times 10^4$ | $2.0 \times 10^4$ | 4.30 | 99.947 |
|  | 5 | $1 \times 10^1$ | $1 \times 10^1$ | $1.0 \times 10^1$ | 1 | 99.999 |
| 10 | 3 | $1.11 \times 10^6$ | $2.7 \times 10^6$ | $1.9 \times 10^6$ | 6.28 | 98.04 |
|  | 5 | $4.57 \times 10^3$ | $1.9 \times 10^5$ | $9.7 \times 10^4$ | 4.99 | 99.9 |
| 11 | 3 | $3.65 \times 10^6$ | $2.45 \times 10^6$ | $3.1 \times 10^6$ | 6.48 | 92.62 |
|  | 5 | $7.95 \times 10^3$ | $8.55 \times 10^2$ | $4.4 \times 10^3$ | 3.64 | 99.989 |
| 12 | 3 | $2.3 \times 10^4$ | $6.0 \times 10^5$ | $3.1 \times 10^5$ | 5.49 | 98.93 |
|  | 5 | $6.3 \times 10^2$ | $3.95 \times 10^2$ | $5.1 \times 10^2$ | 2.71 | 99.998 |
| 13 | 3 | $6.7 \times 10^6$ | $5.85 \times 10^6$ | $6.3 \times 10^6$ | 6.80 | 82.5 |
|  | 5 | $2.5 \times 10^6$ | $1.1 \times 10^7$ | $6.75 \times 10^6$ | 6.83 | 81.1 |

## TABLE VII

Percentage reductions[1] of nalidixic acid-resistant salmonellae due to various treatments[2] followed by storage at 12.8°C. Complied from Tables IV and VI.

| Time (days) | 0 | 0 | 0 | 0 | 0 | 0 | 0 |
|---|---|---|---|---|---|---|---|
| Example | 10 | 8 | 11 | 7 | 9 | 12 | 13 |
| Pct. Reduction | 99.9997 | 99.9993 | 99.9990 | 99.997 | 99.991 | 99.987 | 92.777 |
| Time (days) | 5 | 5 | 5 | 5 | 5 | 5 | 5 |
| Example | 9 | 8 | 7 | 12 | 10 | 11 | 13 |
| Pct. Reduction | 99.947 | 99.85 | 99.55 | 98.93 | 98.04 | 92.62 | 82.5 |
| Time (days) | 7 | 7 | 7 | 7 | 7 | 7 | 7 |
| Example | 9 | 12 | 11 | 10 | 8 | 7 | 13 |
| Pct. Reduction | 99.999 | 99.998 | 99.989 | 99.90 | 98.3 | 98.15 | 81.10 |

[1] Treatments listed in descending order of effectiveness for a give storage time.

[2] Zero time data is listed in Table IV. Data for 3 and 5 days storage at 12.8°C is listed in Table VI.

### DISCUSSION OF RESULTS

For Examples 7-13, untreated inoculated controls averaged $4.8 \times 10^7$ CFU nalidixic acid-resistant Salmonella typhimurium per ml of carcass wash (Table IV). No nalidixic acid-resistant salmonellae were detected in uninoculated, untreated controls (not listed).

Table IV lists results of enumeration of nalidixic acid-resistant salmonellae from carcass rinse solutions for inoculated broilers subjected to the seven test treatments at 0 days storage and at 5 and 7 days storage at 2.2°C. Table V lists the percent reduction in numbers of nalidixic acid-resistant Salmonella typhimurium for each treatment in order of greatest effectiveness at a given storage time (0, 5, or 7 days) at 2.2°C. At time 0, treatments of Examples 10, 8 and 11 were most effective immediately producing 99.9997, 99.9993, and 99.9990 percent reductions, respectively. However, at day 5 the percent reduction for the treatments of Examples 10, 8 and 11 were 42.27, 99.366, and 35.71, respectively. At day 7, the percentage reductions were 98.04, 90.66 and 99.9919, respectively, for the treatments of Example 10, 8 and 11. These observations reflect recovery of sublethally injured cells during refrigerated storage rather than outgrowth of salmonellae during refrigerated storage at 2.2°C.

Table VI lists results of enumeration of nalidixic acid-resistant salmonellae from carcass rinse solutions for inoculated broilers subjected to the 7 treatments, then subsequently stored at 12.8°C for 3 or 5 days. Initial (day 0) counts are listed in Table IV. The percentage reductions from Table VII for carcasses stored at 12.8°C are listed in Table VII together with the initial (day 0) reduction from Table IV to facilitate comparison. Note that the recovery of injured cells observed at 2.2°C also occurs at 12.8°C. Again, no growth is evident during the time period of this study, even at the 12.8°C storage temperature, which reflects moderate to severe temperature abuse.

One important situation not reflected in the microbiological data is the fact that for the sodium hydroxide treatments of Examples 10 and 11, severe sloughing of broiler skin occurred, resulting in a very unacceptable appearance. Both of these treatments are undesirable for commercial use.

The treatments of Examples 7 and 8, both of which involved the use of $Na_3PO_4 \cdot 12H_2O$, were essentially as effective as the treatments of Examples 10 (sodium hydroxide) and 11, (phosphoric acid and sodium hydroxide) without the accompanying adverse effects on appearance of the broiler carcasses. The treatments of Examples 7 and 8 involving the use of $Na_3PO_4 \cdot 12H_2O$ gave an approximately one log cycle greater kill initially that did the treatments of Examples 9 ($Na_2CO_3$) and 12 (75% $H_3PO_4$)/$Na_2CO_3$, both of which involved the use of $Na_2CO_3$. However, the percent reduction for the treatment of Example 9 ($Na_2CO_3$) increased with storage at 2.2°C, so that it had the greatest percent reduction after 5 and 7 days storage at 2.2°C, of any of the 7 treatments (Table V). These trends were essentially the same for the studies conducted at 12.8°C.

### EXAMPLES 14-22

Two grade A broilers at a time were removed from a processing plant after an inside and outside spray body wash just prior to the chill tanks. These are referred to as prechill birds. The birds' temperature ranged from about 35°C to 40°C. The birds were placed in a room temperature treatment solution which was prepared that morning in the concentrations of trisodium orthophosphate indicated in the example. The birds were removed from the processing line using sterile gloves, and placed in the treatment solution for the treatment time indicated. Another person then removed the birds from the treatment solution and put the birds in a sterile plastic bag ready for assay and containing 200 ml of sterile buffer. The bag was closed and shaken for one minute following standard procedure to thoroughly contact the buffer and bird. The buffer was directed to the bottom of the bag. The outside of the bag was sterilized, a bottom corner of the bag cut and the buffer drained into a sterile bottle. The buffer was neutralized to pH 7' using hydrochloric acid and the samples sent to USDA laboratory for standard analysis. Birds were treated with 6%, 9% and 12% trisodium orthophosphate for dip times of 5 seconds, 10 seconds and 15 seconds and were sprayed inside and out for 3 seconds and 10 seconds. In spraying, the inside was sprayed for 1 second and the outside for 2 seconds or the inside was sprayed for 3 seconds and the outside for 7 seconds using a hand sprayer.

Two birds at a time were also removed on just exiting the chill tank at a temperature of 0°-10°C and similarly treated with trisodium orthophosphate and treated for analysis in a similar way. These birds are referred to as post chill birds.

Analysis of the birds was done the first day of treatment and six days later. Two birds were treated and tested at each treatment dip or spray time at 0 days and six days giving a total of four birds for each dip or spray time. Two or three days data is available for a total of eight birds used each day for each dip or spray test condition. The raw results are given in the following tables, where test 14 is 6%, test 15 is 9%, test 16 is 12% trisodium phosphate, all for post chill treatment; test 17 is 6%, test 18 is 9% and test 19 is 12% trisodium orthophosphate all for pre-chill treatment and test 20 and 21 are post-chill treatment by spray with 12% solution of trisodium orthophosphate and example 22 is pre-chill spray treatment with 12% trisodium orthophosphate.

Examples A and B of tables VIII and IX are treatments with two days sampling for total plate count, examples C and D of tables X and XI are two days sampling for Enterobacteriacae. Examples E and F of tables XII and XIII are two days sampling for E. coli and examples G and H of tables XIV and XV are two days sampling for Salmonella.

Control data is included at the bottom of the tables. In any one days test. poultry from about six houses was sampled and treated perhaps accounting for the wide variation in some data.

TABLE VIII

Results (Day III) of Analysis for Total Plate Count

| EXAMPLE | TREATMENT | DIP TIME | | | | | |
|---|---|---|---|---|---|---|---|
| | | 5 Seconds | | 10 seconds | | 15 seconds | |
| | Post-chill | 0 days | 6 days | 0 days | 6 days | 0 days | 6 days |
| 14A | 6% | 50 | 170 | <10 | 360 | <10 | 150 |
| | | <10 | 7,300 | 30 | 140 | <10 | 330 |
| 15A | 9% | <10 | 100 | 270 | 50 | 10 | 60 |
| | | <10 | 130 | 70 | 10 | 10 | 220 |
| 16A | 12% | 10 | 3,400 | 50 | 340 | 10 | 80 |
| | | <10 | 140 | 50 | 190 | <10 | 80 |
| | Pre-chill | | | | | | |
| 17A | 6% | 520 | 570 | 480 | 1,200 | 760 | 250 |
| | | 410 | 490 | 320 | 930 | 70 | 410 |
| 18A | 9% | 240 | 340 | 4,600 | 910 | 430 | 270 |
| | | 150 | 610 | 710 | 270 | 750 | 130 |
| 19A | 12% | 440 | 330 | 160 | 550 | 500 | 5,300 |
| | | 140 | 820 | 610 | 1,100 | 260 | 260 |

| EXAMPLE | TREATMENT | SPRAY TIME | | | |
|---|---|---|---|---|---|
| | | * 3 seconds | | ** 10 seconds | |
| | Post-chill | 0 days | 6 days | 0 days | 6 days |
| 20A | 12% | 170 | 190 | - | - |
| | | 30 | 410 | - | - |
| 21A | 12% | - | - | 10 | 180 |
| | | - | - | 40 | 150 |
| | Pre-chill | | | | |
| 22A | 12% | 40 | - | - | - |
| | | 280 | - | - | - |

* 2 seconds outside and 1 second inside
** 7 seconds outside and 3 seconds inside

| Control Post-chill | | Control Pre-chill | |
|---|---|---|---|
| 0 days | 6 days | 0 days | 6 days |
| 380 | 650 | 440 | - |
| 250 | 290 | - | - |

NOTE: Data in table is represented as number/ml.

TABLE IX

Results (Day II) of Analysis for Total Plate Count

| EXAMPLE | TREATMENT | DIP TIME | | | | | |
| | | 5 Seconds | | 10 seconds | | 15 seconds | |
| | Post-chill | 0 days | 6 days | 0 days | 6 days | 0 days | 6 days |
| 14B | 6% | - | - | 4,100 | 160 | 11,000 | 100 |
| | | - | - | 25 | 130 | 5,100 | 380 |
| 15B | 9% | 5,000 | 570 | 3,100 | 160 | 2,100 | 30 |
| | | 4,900 | 130 | 2,700 | 800 | 2,100 | 50 |
| 16B | 12% | 2,200 | 110 | 2,200 | 920 | 1,200 | 7,000 |
| | | 2,500 | 120 | 1,600 | 470 | 2,800 | 210 |
| | Pre-chill | | | | | | |
| 17B | 6% | 4,300 | 730 | 2,000 | 920 | 1,200 | 7,000 |
| | | 310 | 930 | 200 | 32,000 | 480 | 1,000 |
| 18B | 9% | 4,700 | 430 | 760 | 610 | 500 | 1,000 |
| | | 300 | 330 | 3,500 | 2,400 | 340 | 300 |
| 19B | 12% | 400 | 140 | 510 | 240 | 400 | 320 |
| | | 1,400 | 160 | 400 | 410 | 390 | 310 |

Control Post-chill

| 0 days | 6 days |
| --- | --- |
| 370 | 2,400 |
| 2,100 | 190 |

Note: Data in table is represented as number/ml

## TABLE X
### Results (Day III) of Analysis for Enterobacteriacae

| EXAMPLE | TREATMENT | DIP TIME | | | | | |
|---------|-----------|----------|---|---|---|---|---|
| | | 5 Seconds | | 10 seconds | | 15 seconds | |
| | Post-chill | 0 days | 6 days | 0 days | 6 days | 0 days | 6 days |
| 14C | 6% | 90 | 200 | 133 | 250 | 4 | 67 |
| | | 30 | 660 | 13 | 55 | 70 | 55 |
| 15C | 9% | 10 | 78 | 12,000 | 220 | 2,100 | 39 |
| | | <1 | 43 | 37 | 52 | 1,300 | 53 |
| 16C | 12% | <1 | 3,900 | 2 | 170 | <1 | 7 |
| | | 1 | 56 | <1 | 170 | <1 | 29 |
| | Pre-chill | | | | | | |
| 17C | 6% | 32 | 77 | 22 | 250 | 19 | 280 |
| | | 71 | 160 | 41 | 350 | 25 | 340 |
| 18C | 9% | 13 | 1 | 96 | 280 | 52 | 100 |
| | | 23 | <1 | 300 | 130 | 75 | 59 |
| 19C | 12% | 112 | 13 | 28 | <1 | 165 | 70 |
| | | 30 | <1 | 49 | <1 | 8 | 10 |

| | | SPRAY TIME | | | |
|---|---|------------|---|---|---|
| | | 3 seconds * | | 10 seconds ** | |
| | Post-chill | 0 days | 6 days | 0 days | 6 days |
| 20C | 12% | 51 | 5 | - | - |
| | | 7 | 12 | - | - |
| 21C | 12% | - | - | 6 | 2 |
| | | - | - | 2 | 16 |
| | Pre-chill | | | | |
| 22C | 12% | 7 | - | - | - |
| | | 7 | - | - | - |

* 2 seconds outside and 1 second inside
** 7 seconds outside and 3 seconds inside

| Control Post-chill | | Control Pre-chill | |
|--------------------|---|-------------------|---|
| 0 days | 6 days | 0 days | 6 days |
| 79 | 34 | 53 | - |
| 40 | 73 | - | - |

Note: Data in table is represented as number/ml

TABLE XI

Results (Day II) of Analysis for Enterobacteriacae

| EXAMPLE | TREATMENT | DIP TIME | | | | | |
|---|---|---|---|---|---|---|---|
| | | 5 Seconds | | 10 seconds | | 15 seconds | |
| | Post-chill | 0 days | 6 days | 0 days | 6 days | 0 days | 6 days |
| 14D | 6% | - | - | 3 | 33 | 2 | 25 |
| | | - | - | <1 | 31 | 130 | 97 |
| 15D | 9% | <1 | 43 | 7 | 22 | <1 | 11 |
| | | 9 | 11 | 3 | 19 | 1 | 60 |
| 16D | 12% | 2 | 7 | 3 | 8 | <1 | 9 |
| | | 4 | 10 | <1 | 17 | <1 | 39 |
| | Pre-chill | | | | | | |
| 17D | 6% | 20 | 3,500 | 66 | 130 | 98 | 3,600 |
| | | 22 | 70 | 33 | 390 | 93 | 880 |
| 18D | 9% | 72 | 330 | 77 | 360 | 34 | 630 |
| | | 41 | 150 | 95 | 3,700 | 39 | 86 |
| 19D | 12% | 27 | 51 | 78 | 53 | 51 | 38 |
| | | 120 | 560 | 25 | 170 | 23 | 170 |

| Control Post-chill | |
|---|---|
| 0 days | 6 days |
| - | 132 |
| - | 60,000 |

Note: Data in table is represented as number/ml

TABLE XII
Results (Day III) of Analysis for E. coli

| EXAMPLE | TREATMENT | DIP TIME | | | | | |
|---|---|---|---|---|---|---|---|
| | | 5 Seconds | | 10 seconds | | 15 seconds | |
| | Post-chill | 0 days | 6 days | 0 days | 6 days | 0 days | 6 days |
| 14E | 6% | 40 | 52 | 85 | 30 | 3 | 9 |
| | | 6 | 30 | 5 | 10 | 13 | 2 |
| 15E | 9% | <1 | 32 | 1,200 | 51 | 30 | 12 |
| | | <1 | 5 | <1 | 6 | 1,200 | 14 |
| 16E | 12% | <1 | 8 | <1 | 7 | <1 | 2 |
| | | <1 | 10 | <1 | 16 | <1 | 10 |
| | Pre-chill | | | | | | |
| 17E | 6% | 27 | 41 | 9 | 50 | 9 | 33 |
| | | 57 | 100 | 22 | 250 | 13 | 80 |
| 18E | 9% | 10 | 1 | 94 | 100 | 36 | 48 |
| | | 21 | <1 | 300 | 61 | 61 | 6 |
| 19E | 12% | 107 | <1 | 13 | <1 | 78 | 23 |
| | | 15 | <1 | 47 | <1 | 3 | <1 |

| EXAMPLE | TREATMENT | SPRAY TIME | | | |
|---|---|---|---|---|---|
| | | 3 seconds * | | 10 seconds ** | |
| | Post-chill | 0 days | 6 days | 0 days | 6 days |
| 20E | 12% | 1 | <1 | - | - |
| | | 2 | 2 | - | - |
| 21E | 12% | - | - | 1 | <1 |
| | | - | - | <1 | 14 |
| | Pre-chill | | | | |
| 22E | 12% | <1 | - | - | - |
| | | 1 | - | - | - |

* 2 seconds outside and 1 second inside
** 7 seconds outside and 3 seconds inside

| Control Post-chill | | Control Pre-chill | |
|---|---|---|---|
| 0 days | 6 days | 0 days | 6 days |
| 12 | 4 | 50 | - |
| 33 | 20 | - | - |

Note: Data in table is represented as number/ml

20

### TABLE XIII
Results (Day II) of Analysis for E. coli

| EXAMPLE | TREATMENT | DIP TIME | | | | | |
|---|---|---|---|---|---|---|---|
| | | 5 Seconds | | 10 seconds | | 15 seconds | |
| | Post-chill | 0 days | 6 days | 0 days | 6 days | 0 days | 6 days |
| 14F | 6% | - | - | <1 | 11 | <1 | 10 |
| | | - | - | <1 | 3 | 4 | 73 |
| 15F | 9% | <1 | 23 | <1 | 7 | <1 | 3 |
| | | 2 | 2 | <1 | 12 | <1 | 8 |
| 16F | 12% | <1 | 2 | <1 | 3 | <1 | 1 |
| | | <1 | 5 | <1 | 5 | <1 | 31 |
| | Pre-chill | | | | | | |
| 17F | 6% | 7 | 58 | 8 | 63 | 36 | 37 |
| | | 7 | 57 | 4 | 350 | 12 | 81 |
| 18F | 9% | 22 | 13 | 22 | 10 | 7 | 29 |
| | | 7 | 20 | 21 | 1,400 | 7 | 15 |
| 19F | 12% | 5 | 20 | 29 | 24 | 10 | 21 |
| | | 36 | 1 | 5 | 153 | 2 | 12 |

| Control Post-chill | |
|---|---|
| 0 days | 6 days |
| 20 | 36 |
| 15 | 3,100 |

Note: Data in table is represented as number/ml

TABLE XIV
Results (Day III) of Analysis for Salmonella

| EXAMPLE | TREATMENT | DIP TIME | | | | | |
|---|---|---|---|---|---|---|---|
| | | 5 Seconds | | 10 seconds | | 15 seconds | |
| | Post-chill | 0 days | 6 days | 0 days | 6 days | 0 days | 6 days |
| 14G | 6% | - | - | - | - | - | - |
| | | - | - | - | - | - | - |
| 15G | 9% | - | - | - | + | - | - |
| | | - | - | - | - | - | - |
| 16G | 12% | - | - | - | - | - | - |
| | | - | - | - | - | - | - |
| | Pre-chill | | | | | | |
| 17G | 6% | - | - | - | - | - | - |
| | | - | - | + | - | - | - |
| 18G | 9% | - | + | - | - | - | - |
| | | - | + | - | - | - | - |
| 19G | 12% | - | - | - | - | - | - |
| | | - | + | - | - | - | - |

| | | SPRAY TIME | | | |
|---|---|---|---|---|---|
| | | * 3 seconds | | ** 10 seconds | |
| | Post-chill | 0 days | 6 days | 0 days | 6 days |
| 20G | 12% | - | - | NA | NA |
| | | - | - | NA | NA |
| 21G | 12% | NA | NA | - | - |
| | | NA | NA | - | - |
| | Pre-chill | | | | |
| 22G | 12% | - | NA | NA | NA |
| | | - | NA | NA | NA |

* 2 seconds outside and 1 second inside
** 7 seconds outside and 3 seconds inside

| Control Post-chill | | Control Pre-chill | |
|---|---|---|---|
| 0 days | 6 days | 0 days | 6 days |
| - | + | - | NA |
| - | - | NA | NA |

Note: Data in table is represented as number/25ml

22

TABLE XV
Results (Day 11) of Analysis for Salmonella

| EXAMPLE | TREATMENT | 5 Seconds | | 10 seconds | | 15 seconds | |
|---|---|---|---|---|---|---|---|
| | Post-chill | 0 days | 6 days | 0 days | 6 days | 0 days | 6 days |
| 14H | 6% | NA | NA | - | - | - | - |
| | | NA | NA | - | - | - | - |
| 15H | 9% | - | - | - | - | - | - |
| | | - | - | - | - | - | - |
| 16H | 12% | - | - | - | - | - | - |
| | | - | - | - | - | - | - |
| | Pre-chill | | | | | | |
| 17H | 6% | - | - | + | - | + | - |
| | | - | - | - | - | - | - |
| 18H | 9% | - | - | - | - | - | - |
| | | - | - | + | - | - | - |
| 19H | 12% | - | - | - | - | - | - |
| | | - | - | - | - | - | - |

| Control Post-chill | |
|---|---|
| 0 days | 6 days |
| - | - |
| - | - |

Note: Data in table is represented as number/25ml.

RESULTS

Table VII

The pre-chill results of the total plate count tests are inconclusive but the post chill treatment with trisodium orthophosphate did reduce the plate count compared to control. Spray results would indicate reduction in plate count due to treatment.

Table IX

The results are inconclusive.

Table X

The pre-chill and post-chill treatment, dip or spray, with trisodium orthophosphate is effective in reducing the count of Enterobacteriacae with the spray results very positive.

Table XI

The data appears to confirm the reduction in bacteria found in Table X, especially post-chill treatment.

Table XII

The pre-chill and post-chill treatment, dip or spray, with trisodium orthophosphate is effective in reducing the count of E. coli, particularly at higher trisodium orthophosphate concentration.

Tables XIV and XV

The treatment with trisodium orthophosphate results in only one incident of salmonella presence in post-chill treatment.

Trialkali metal phosphate solution at 4% or greater is also effective against campylobacter type organisms such as C. jejuni and the like.

EXAMPLE 23

Further tests were conducted on whole uninoculated broiler carcasses without giblets removed right after the chilling step in a poultry process. The birds were obtained from a local poultry processor on the day of slaughter. Three hundred carcasses packed on ice and held in a cooler (40°) on ice until used in the study. The birds were taken randomly from the boxes for each of the tests.

Sterile solutions of varying concentrations of trisodium orthophosphate were previously prepared each day for the day's tests. A total of 60 birds were tested per trisodium phosphate concentration for three exposure times resulting in 20 birds tested for each TSP concentration/exposure time variable. The testing was done over 4 separate days (over a 7 day period) with five birds per TSP/exposure time variable studied each day;

On each day a trial was conducted, an adequate number of birds for each test variable were randomly selected from each of the shipping cartons being held under refrigeration. The birds were placed in the designated TSP solution and gently agitated during the exposure time. After the specified immersion time was completed, the birds were removed from the solution legs first and drained for a period of 30 seconds. After the drain period each processed bird was placed in a separate sterile plastic bag containing 200 ml of sterile Butterfield's Phosphate Buffer and rinsed for one minute by shaking through a one foot arc. After the whole carcass rinse procedure was completed, the rinse waters were divided into two equal aliquots (ca. 100 ml each) in sterile whirlpak bags. One of the two rinse waters obtained from each bird was immediately neutralized using 12N HCl prior to adding the 10X Lactose Broth enrichment medium and held at room temperature for 30 minutes. The second rinse water per bird was enriched with 10X Lactose Broth immediately, held at room temperature for 30 minutes, and then neutralized with 6N HCl. That Broth enriched wash waters were then incubated at 35°C for 24 hours prior to evaluation by the Gene Trak Systems[R] colorimetric DNA probe test for the rapid detection of <u>Salmonella</u> species (FDA, 1984; Rose et al., 1991). Samples determined to be positive by the gene probe assay were confirmed by conventional culture methodology (USDA, 1974). These assays determine the presence (positive) or absence (negative) of salmonella DNA.

The results are summarized in tables XVI-XXIII.

The data is summarized for all four days tests where the incident of salmonella on control birds was extremely low and unexpected. The data in tables XVI-XXI (neutralized and unneutralized buffer) clearly shows that dipping poultry in treatment solutions containing 8% and 12% trisodium orthophosphate reduces salmonella incidence to zero in the 10 second and 30 second dip tests. The overall results in Table XXII for the testing show no salmonella present on 20 birds when treated with solutions of 8% and 12% trisodium orthophosphate for 10 and 30 second dip times and only 1 contaminated bird for the 15 minute dip time compared to 5 contaminated birds for control, 5 contaminated birds for 1% TSP and 4 contaminated birds for 4% TSP.

Table XXIII summarizes the percent of positive incidence of Salmonella found for each bird after treatment and clearly shows that treatment of broilers during processing with at least about 4% trisodium orthophosphate reduces the incidence of Salmonella contamination. The present experiment on uninoculated birds is clear evidence that high concentrations of trisodium orthophosphate solution is unexpectedly able to reduce the incidence of natural Salmonella contamination on broilers compared to a water wash or use of low concentrations (1% or less) trisodium phosphate. The test results of tables XXII and XXIII confirm the earlier results set forth herein which indicate that a treatment solution containing about 4% or more trisodium orthophosphate is effective to remove, reduce or retard salmonella and other bacteria on poultry.

Table XVI
Salmonella Incidence on Post-Chill whole
broilers after 10 second exposure to Trisodium
orthophosphate (TSP) (Neutralized Buffer)

| Concentration TSP | 10 sec Dip Incidence per day 5 birds for each test | | | | Average for 4 days |
|---|---|---|---|---|---|
| | 1st day | 2nd day | 3rd day | 4th day | |
| 0 | 0/5 | 1/5 | 0/5 | 1/5 | 2/20 |
| 1% | 1/5 | 0/5 | 0/5 | 1/5 | 2/20 |
| 4% | 0/5 | 1/5 | 1/5 | 0/5 | 2/20 |
| 8% | 0/5 | 0/5 | 0/5 | 0/5 | 0/20 |
| 12% | 0/5 | 0/5 | 0/5 | 0/5 | 0/20 |

Table XVII
Salmonella Incidence on Post-Chill whole
broilers after 30 seconds of Trisodium
orthophosphate (TSP) (Neutralized buffer)

| Concentration TSP | 30 Sec. Dip Incidence per day 5 birds for each test | | | | Average for 4 days |
|---|---|---|---|---|---|
| | 1st day | 2nd day | 3rd day | 4th day | |
| 0 | 0/5 | 0/5 | 0/5 | 1/5 | 1/20 |
| 1% | 1/5 | 1/5 | 0/5 | 0/5 | 2/20 |
| 4% | 0/5 | 0/5 | 0/5 | 1/5 | 1/20 |
| 8% | 0/5 | 0/5 | 0/5 | 0/5 | 0/20 |
| 12% | 0/5 | 0/5 | 0/5 | 0/5 | 0/20 |

### Table XVIII
Salmonella Incidence on Post-Chill whole
broilers after 15 minute exposure to Trisodium
orthophosphate (TSP) (Neutralized buffer)

| Concentration TSP | 15 Minute Dip Incidence per day 5 birds per test | | | | Average for 4 days |
|---|---|---|---|---|---|
| | 1st day | 2nd day | 3rd day | 4th day | |
| 0 | 1/5 | 0/5 | 0/5 | 0/5 | 1/20 |
| 1% | 0/5 | 1/5 | 0/5 | 0/5 | 1/20 |
| 4% | 1/5 | 0/5 | 0/5 | 0/5 | 1/20 |
| 8% | 0/5 | 0/5 | 0/5 | 0/5 | 0/20 |
| 12% | 1/5 | 0/5 | 0/5 | 0/5 | 1/20 |

### Table XIX
Salmonella Incidence on Post-Chill whole broilers
after 10 second exposure to Trisodium orthophosphate
(TSP) (Non-neutralized buffer)

| Concentration TSP | 10 Second Incidence per day 5 days for each test | | | | Average of all 4 days |
|---|---|---|---|---|---|
| | 1st day | 2nd day | 3rd day | 4th day | |
| 0 | 0/5 | 0/5 | 0/5 | 1/5 | 1/20 |
| 1% | 0/5 | 0/5 | 0/5 | 1/5 | 1/20 |
| 4% | 0/5 | 0/5 | 1/5 | 0/5 | 1/20 |
| 8% | 0/5 | 0/5 | 0/5 | 0/5 | 0/20 |
| 12% | 0/5 | 0/5 | 0/5 | 0/5 | 0/20 |

26

Table XX
Salmonella Incidence on Post-Chill whole
broilers after 30 second exposure to
Trisodium orthophosphate (TSP)
(Non-neutralized buffer)

| Concentration TSP | 30 Seconds Dip Incidence per day 5 birds for each test | | | | Average of all 4 days |
|---|---|---|---|---|---|
| | 1st day | 2nd day | 3rd day | 4th day | |
| 0% | 0/5 | 1/5 | 0/5 | 1/5 | 2/20 |
| 1% | 0/5 | 0/5 | 0/5 | 0/5 | 0/20 |
| 4% | 0/5 | 0/5 | 0/5 | 1/5 | 1/20 |
| 8% | 0/5 | 0/5 | 0/5 | 0/5 | 0/20 |
| 12% | 0/5 | 0/5 | 0/5 | 0/5 | 0/20 |

Table XXI
Salmonella Incidence on Post Chill whole
broilers after 15 minutes exposure to Trisodium
orthophosphate (TSP) (Non-neutralized buffer)

| Concentration TSP | 15 Minutes Dip Incidence per day 5 birds for each test | | | | Average of all 4 days |
|---|---|---|---|---|---|
| | 1st day | 2nd day | 3rd day | 4th day | |
| 0% | 0/5 | 0/5 | 0/5 | 0/5 | 0/20 |
| 1% | 0/5 | 0/5 | 0/5 | 0/5 | 0/20 |
| 4% | 0/5 | 0/5 | 0/5 | 0/5 | 0/20 |
| 8% | 0/5 | 0/5 | 0/5 | 0/5 | 0/20 |
| 12% | 1/5 | 0/5 | 0/5 | 0/5 | 1/20 |

Table XXII

| Detection of Salmonella positive post chill whole broiler carcasses after exposure to various concentrations of Trisodium Phosphate (all trials) | | | | |
|---|---|---|---|---|
| Exposure Time | Trisodium Phosphate Concentration (%w/w) | Neutralized Buffer | Non-Neutralized Buffer | Total[a] |
| 10 Seconds | 0 | 2/20[b] | 1/20 | 2/20 |
|  | 1 | 2/20 | 0/20 | 2/20 |
|  | 4 | 2/20 | 1/20 | 2/20 |
|  | 8 | 0/20 | 0/20 | 0/20 |
|  | 12 | 0/20 | 0/20 | 0/20 |
| 30 Seconds | 0 | 1/20 | 1/20 | 2/20 |
|  | 1 | 2/20 | 0/20 | 2/20 |
|  | 4 | 1/20 | 1/20 | 1/20 |
|  | 8 | 0/20 | 0/20 | 0/20 |
|  | 12 | 0/20 | 0/20 | 0/20 |
| 15 Minutes | 0 | 1/20 | 0/20 | 1/20 |
|  | 1 | 1/20 | 0/20 | 1/20 |
|  | 4 | 1/20 | 0/20 | 1/20 |
|  | 8 | 0/20 | 0/20 | 0/20 |
|  | 12 | 1/20 | 1/20 | 1/20 |

a - Total number of individual birds found to be positive for Salmonella.
b - Number of individual birds positive for Salmonella per number of individual birds tested.

Table XXIII

| Percent of Salmonella positive post chill whole broiler carcasses detected after exposure to various concentrations of Trisodium Phosphate[a] | |
|---|---|
| Trisodium Phosphate Concentration (%w/w) | Percent Positive |
| 0 | 8.3 |
| 1 | 8.3 |
| 4 | 6.7 |
| 8 | 0 |
| 12 | 1.7 |

a - Percent of birds found to be positive for Salmonella for all exposure times for all trials.

Trisodium phosphate either alone or in combination with other food ingredients seems to have great potential for use in eliminating salmonella on poultry carcasses.

Example 24

Carcass Preparation

A barrow was slaughtered and split in half. The right side was used as Control and the left side was treated with trisodium orthophosphate (TSP). One hour and fifteen minutes post-slaughter (pre-rigor), the left side was totally submerged in a solution (pH 13.14) containing 10% TSP for 2 minutes, then subsequently placed in a 38°F cooler with the control for 48 hours.

Microbiological Procedures

Fifteen minutes following treatment, both Control and orthophosphate carcasses were surface swabbed at two locations at a portion of the belly that parallel to the $10_{th}$ rib and an area on the carcass exterior (skin) directly opposite the $10^{th}$ rib sampling location.

The areas were swabbed (18 strokes) with a sterile bent glass rod. The rod was then placed in 50 ml of a phosphate buffer (pH 6.0). One milliliter of the 50 ml solution was then diluted in a 9 ml phosphate buffer (pH 6.0). A total of 6 dilutions were performed. After dilution, 1/10 ml was placed in a petri dish containing a pre-poured agar with 10% sheep's blood. The dishes were incubated for 48 hours at 34°F. Total plate counts were then conducted.

A 48 hour swabbing was also conducted in the same manner as previously mentioned but at 5 different locations. These locations were as follows:

1. Parallel the anterior end of aitch bone.
2. Diaphragm muscle located ventral to the $10^{th}$ bone
3. Jowl region
4. Skin of the ham opposite the aitch bone.
5. Skin of the shoulder opposite the $2^{nd}$ rib.

Meat pH

A meat sample was obtained from the anterior end of the aitch bone (location 1) and the belly located ventral to the $10^{th}$ rib (location 2). A surface pH was taken on each sample. The meat sample was then ground and a composite pH was taken.

Results

## Table XXIV
## pH of Hog Carcasses

| Sample Location | pH | |
| --- | --- | --- |
| | Sample Surface | Ground Sample |
| **Control** | | |
| Ham - Anterior to the aitch bone | 6.77 | 5.96 |
| Belly - Ventral | 6.58 | 5.72 |
| **TSP Treated** | | |
| Ham - Anterior to the aitch bone | 6.84 | 5.99 |
| Belly - Ventral | 6.90 | 5.89 |

Results

Muscle pH

Table XXIV shows that the surface pH was greater than the ground sample pH but this difference was not greater than the 1.0 pH point at any given location. The TSP treated sample pH was greater than the control for both surface and ground sample pH readings. However, the greatest pH difference was 0.32 between the surface pH of the control belly and TSP belly. These findings suggest that the little difference between the control and TSP would have no effect on processing or consumer preference.

1.5 Hours Post-Slaughter

There was no distinct visual differences between the control and the TSP treated carcass. The TSP treated carcass did have a slightly darker pigment color but was not that easily recognizable.

The total plate count conducted was inconclusive for both the control and TSP.

48 Hours Post-Slaughter

Visual appearance at this time period was very similar to the 1.5 hour post-slaughter, showing little difference in muscle pigment color between the control and TSP.

## Table XXV
### Total Plate Count 48 Hours Post-Slaughter

| Location | 0 Dilution |
|---|---|
| **Control** | |
| 1 | 18 |
| 2 | 15 |
| 3 | 12 |
| 4 | 1 |
| 5 | 5 |
| | |
| **TSP Treated** | |
| 1 | 0 |
| 2 | 0 |
| 3 | 0 |
| 4 | 0 |
| 5 | 0 |

The Total Plate Count (Table XXV) showed bacterial growth in the nondiluted control sample but not the TSP treated sample. The greatest plate count was found at the aitch bone followed by the belly, jowl, shoulder (skin) and ham (skin). There was no growth recorded in the dilutions for either the control or TSP treatment.

The Example shows a surprising lack of discoloration of a paired split hog carcass treated pre-rigor with trisodium orthophosphate.

The Example clearly shows the ability of Trisodium Phosphate to control bacterial contamination and/or growth on a hog carcass without affecting the visual appearance of the lean muscle. A 10% trisodium orthophosphate solution was used to submerge the hog carcass for a two minute time treatment gave a complete reduction of total plate count based on 48 hour swabbing done at various locations on the carcass. Trisodium phosphate either alone or in combination with other additives, with the proviso that the treatment solution of orthophosphate is free of alcohol, nitrite or nitrates, and ascorbic acid has great potential for use in eliminating salmonella and other organisms red meat carcasses.

Example 25

Tests were made to determine the antimicrobial effectiveness of trisodium orthophosphate (TSP) on the survival of several typical seafood spoilage bacterial in laboratory model systems.

## EXPERIMENT APPROACH

A. Test Variables

Two different test systems (i.e. water systems) were used to evaluate the efficacy of two different chemical additives which were labeled "Agent A" (3% TSP) and "Agent B" (1.5% TSP + 1.5% KCl). One water system was formulated as a sterile synthetic sea water according to the following formula.

| Chemical | Percent |
|---|---|
| NaCl | 2.348 |
| $MgCl_2$ s $6H_2o$ | 1.065 |
| $Na_2SO_4$ | 0.392 |
| $CaCl_2$ x 2HO | 0.146 |
| KCl | 0.066 |
| $H_2O$ | 95.98 |
| Total | 100.00 |

The second water system was comprised of sterile deionized water, and represents fresh water. The concentration of Agent A and Agent B that was added to separate sea water systems for evaluation was 0.5% (w/v). The concentration of Agents A and B that were added to separate fresh water systems was 3.0% (w/v).

B. Test Microorganisms

For the purpose of this evaluation, three commonly identified seafood spoilage microorganisms were utilized. They included:

Pseudomonal aeruginosa

Bacillus cerus

Moraxella osloensis

The antimicrobial efficacy of each chemical additive in each water system was evaluated against 24 hour cultures of the first two strains, and 48 hour cultures were evaluated for the slower growing Moraxella species.

C. Test Procedure

Ninety nine ml volumes of the test water systems with the appropriate concentrations of Agents A or B in 250 ml Erlenmeyer flasks were tempered to a constant temperature of 27°C. in a water bath. Each flask was inoculated individually with one ml of the test culture. Target inoculum level was $1.0 \times 10^8$ cfu/ml. to yield a flask inoculum level of $1.0 \times 10^6$ cfu/ml. The flasks were agitated and a 1 ml time zero sample was removed into a 9 ml neutralization blank. After 60 seconds of contact time another 1 ml sample was removed into a second 9 ml neutralization blank. Samples were plated in triplicate using serial dilutions. The spread plate method was used for P aeruginosa and pour plate method was used for the other two test strains. Each trial was run in duplicate, and a time zero culture control was included for each trial.

## RESULTS AND DISCUSSION

The results of experiments evaluating the effect of Agents A and B against P aeruginosa at 27°C are presented in Tables 26 and 27. The percent reductions of the bacterial populations after treatment with these Agents are presented in Tables 28 and 29.

Table 26

| Recovery of P. aeruginosa after Treatment with Agent A in Fresh (3.0%) and Synthetic Sea Water (0.5%) Systems. | | | | |
|---|---|---|---|---|
| | | Initial Inoculum | REPLICATE | |
| | | | A | B |
| Fresh Water | T = 0<br>T = 60 | $6.8 \times 10^{8a}$ | $<1.0 \times 10^{3a}$<br>$<1.0 \times 10^3$ | $<1.0 \times 10^3$<br>$<1.0 \times 10^3$ |
| Sea Water | T = 0 | $5.1 \times 10^8$ | $3.9 \times 10^8$<br>$1.1 \times 10^8$ | $5.5 \times 10^8$<br>$9.2 \times 10^7$ |

[a] cfu/ml

Table 27

| Percent Reduction of P. aeruginosa after Treatment with Agent A in Fresh (3.0%) and Synthetic Sea Water (0.5%) Systems. | | | | | |
|---|---|---|---|---|---|
| | | Initial Inoculum | REPLICATE | | Average |
| | | | A | B | |
| Fresh Water | T = 0<br>T = 60 | $6.8 \times 10^{8a}$ | $>99.994^b$<br>$>99.994$ | $>99.994$<br>$>99.994$ | $>99.994$<br>$>99.994$ |
| Sea Water | T = 0<br>T = 60 | $5.1 \times 10^8$ | 42.6<br>83.8 | 19.1<br>86.5 | 30.9<br>85.2 |

[a] cfu/m.
[b] %

Table 28

| Recovery of P. aeruginosa after Treatment with Agent B in Fresh (3.0%) and Synthetic Sea Water (0.5%) Systems. | | | | |
|---|---|---|---|---|
| | | Initial Inoculum | REPLICATE | |
| | | | A | B |
| Fresh Water | T = 0<br>T = 60 | $6.0 \times 10^{8a}$ | $<1.0 \times 10^{3a}$<br>$<1.0 \times 10^3$ | $<1.0 \times 10^3$<br>$<1.0 \times 10^3$ |
| Sea Water | T = 0<br>T = 60 | $4.5 \times 10^8$ | $3.0 \times 10^8$<br>$3.4 \times 10^8$ | $4.2 \times 10^8$<br>$3.6 \times 10^8$ |

[a] cfu/ml

Table 29

| Percent Reduction of P. aeruginosa after Treatment with Agent B in Fresh (3.0%) and Synthetic Sea Water (0.5%) Systems. | | | | | |
|---|---|---|---|---|---|
| | | Initial Inoculum | REPLICATE | | Average |
| | | | A | B | |
| Fresh Water | T = 0 <br> T = 60 | 6.0 x 10$^{8a}$ | >99.994$^b$ <br> >99.994 | >99.994 <br> >99.994 | >99.994 <br> >99.994 |
| Sea Water | T = 0 <br> T = 60 | 4.5 x 10$^8$ | 33.3 <br> 7.1 | 24.4 <br> 20.0 | 28.9 <br> 13.6 |

[a] cfu/ml
[b] %

Both Agent A and Agent B were effective at the 3.0% level in the fresh water systems, showing a > 99.994% reduction for both T = 0 and T = 60 seconds. At the 0.5% level in sea water, Agent A was minimally effective, showing an average reduction of 30.9% at T = 0. Agent A was more effective at T = 60 seconds (avg. reduction 85.2%). Agent B was even less effective in sea water showing an average initial reduction of 28.9% and an average reduction of only 13.6% after 60 seconds contact time.

The effects of Agents A and B on B. cereus are presented in Tables 30 and 32. Tables 31 and 33 show the percent reduction of B. cereus in these lab model systems.

Table 30

| Recovery of B. cereus after Treatment with agent A in Fresh (3.0%) and Synthetic Sea Water (0.5%) Systems. | | | | |
|---|---|---|---|---|
| | | Initial Inoculum | REPLICATE | |
| | | | A | B |
| Fresh Water | T = 0 | 4.0 x 10$^{7a}$ | 1.6 x 10$^{5a}$ <br> 5.9 x 10$^4$ | 6.6 x 10$^4$ <br> 3.3 x 10$^4$ |
| Sea Water | T = 60 | 4.0 x 10$^7$ | 3.2 x 10$^7$ <br> 2.9 x 10$^7$ | 3.3 x 10$^7$ <br> 3.1 x 10$^7$ |

[a] cfu/ml

Table 31

| Percent Reduction of B. cereus after Treatment with Agent A in Fresh (3.0%) and Synthetic Sea Water (0.5%) Systems. | | | | | |
|---|---|---|---|---|---|
| | | Initial Inoculum | REPLICATE | | Average |
| | | | A | B | |
| Fresh Water | T = 0 T = 60 | $4.0 \times 10^{7a}$ | $99.6^{b}$ 99.9 | 99.8 99.9 | 99.7 99.9 |
| Sea Water | T = 0 T = 60 | $4.0 \times 10^{7}$ | 20.0 27.5 | 17.5 22.5 | 18.8 25.0 |

[a] cfu/ml

[b] %

Table 32

| Recovery of B. cereus after Treatment with Agent B in Fresh (3.0%) and Synthetic Sea Water (0.5%) Systems. | | | | |
|---|---|---|---|---|
| | | Initial Inoculum | REPLICATE | |
| | | | A | B |
| Fresh Water | T = 0 T = 60 | $3.4 \times 10^{7a}$ | $1.3 \times 10^{4a}$ $9.0 \times 10^{3}$ | $1.8 \times 10^{4}$ $1.0 \times 10^{4}$ |
| Sea Water | T = 0 T = 60 | $3.4 \times 10^{7}$ | $2.8 \times 10^{7}$ $2.5 \times 10^{7}$ | $3.0 \times 10^{7}$ $2.6 \times 10^{7}$ |

[a] cfu/ml

Table 33

| Percent Reduction of B. cereus after Treatment with Agent B in Fresh (3.0%) and Synthetic Sea Water (0.5%) Systems. | | | | | |
|---|---|---|---|---|---|
| | | Initial Inoculum | REPLICATE | | Average |
| | | | A | B | |
| Fresh Water | T = 0 T = 60 | $3.4 \times 10^{7a}$ | $99.96^{b}$ 99.97 | 99.95 99.97 | 99.96 99.97 |
| Sea Water | T = 0 T = 60 | $3.4 \times 10^{7}$ | 17.7 26.5 | 11.8 23.5 | 14.8 25.0 |

[a] cfu/ml

[b] %

In the fresh water system (3.0%) Agents A and B both gave a high percentage of reduction at T = 0 (99.7 and 99.96 respectively). The reduction at T = 60 was 99.9% for Agent A and 99.97% for Agent B for this system. Both were much less effective in the sea water systems (0.5%) showing less than 30% reduction at both times for both Agents.

The results of experiments evaluating the effectiveness of Agent A and Agent B against M. osloensis at 27°C. are shown in Tables 34 and 36. The percent reduction of bacterial populations after contact with Agents A and B are shown in Tables 35 and 37.

Table 34

| Recovery of M. osloensis after Treatment with Agent A in Fresh (3.0%) and Synthetic Sea Water (0.5%) Systems. | | | | |
|---|---|---|---|---|
| | | Initial Inoculum | RELATIVE | |
| | | | A | B |
| Fresh Water | T = 0 T = 60 | $1.7 \times 10^{7a}$ | $9.2 \times 10^{6a}$ $1.9 \times 10^3$ | $1.1 \times 10^7$ $1.0 \times 10^3$ |
| Sea Water | T = 0 T = 60 | $1.7 \times 10^7$ | $1.2 \times 10^7$ $1.3 \times 10^7$ | $1.3 \times 10^7$ $1.3 \times 10^7$ |

Table 35

| Percent Reduction of M. osloensis after Treatment with Agent A in Fresh (3.0%) and Synthetic Sea Water (0.5%) Systems. | | | | | |
|---|---|---|---|---|---|
| | | Initial Inoculum | RELATIVE | | Average |
| | | | A | B | |
| Fresh Water | T = 0 T = 60 | $1.7 \times 10^{7a}$ | $45.9^b$ 99.994 | 35.3 99.994 | 40.6 99.994 |
| Sea Water | T = 0 T = 60 | $1.7 \times 10^7$ | 29.4 23.5 | 23.5 23.5 | 26.5 23.5 |

[a] cfu/ml
[b] %

Table 36

| Recovery of M. osloensis after Treatment with Agent B in Fresh (3.0%) and Synthetic Sea Water (0.5%) Systems | | | | |
|---|---|---|---|---|
| | | Initial Inoculum | RELATIVE | |
| | | | A | B |
| Fresh Water | T = 0 T = 60 | $9.9 \times 10^{6a}$ | $4.2 \times 10^{6a}$ $<1.0 \times 10^3$ | $4.9 \times 10^6$ $2.0 \times 10^3$ |
| Sea Water | T = 0 T = 60 | $9.8 \times 10^6$ | $7.0 \times 10^6$ $6.9 \times 10^6$ | $7.7 \times 10^6$ $6.6 \times 10^6$ |

Table 37

| Percent Reduction of M. osloensis after Treatment with Agent B in Fresh (3.0%) and Synthetic Sea Water (0.5%) Systems | | | | | |
|---|---|---|---|---|---|
| | | Initial Inoculum | REPLICATE | | Average |
| | | | A | B | |
| Fresh Water | T = 0 T = 60 | $9.8 \times 10^{6a}$ | $57.1^b$ >99.94 | 50.0 99.98 | 53.6 |
| Sea Water | T = 0 T = 60 | $9.8 \times 10^6$ | 28.6 29.6 | 21.4 32.7 | 25.0 31.2 |

[a] cfu/ml

[b] %

The initial reduction was only approximately 50% for both agents at the 3.0% level in the fresh water system. After sixty seconds the percent reduction was >99.98 for both agents. Initially, Agent B showed a slightly greater reduction than Agent A. In the sea water systems these agents were unable to produce a reduction of more than 30%.

SUMMARY

Overall, both Agents A and B at the 3.0% level in fresh water caused a reduction of >99.6% for all bacteria tested after sixty seconds contact time. Both agents at this level caused >99.6% reduction initially for P. aeruginosa and B. cereus. The Moraxella strain used was less effected by these Agents at T = 0.

The systems with 0.5% agent added to synthetic sea water produced a reduction of less than 31% in all but the T = 60 trial against P. aeruginosa.

Trisodium orthophosphate either per se or in combination with other ingredients seems to have great potential for use in eliminating spoilage bacteria during processed raw fish and crustaceans. For naturally occuring microorganisms about 4% to saturation of trisodium orthophosphate is effective.

## Claims

1. A process for treating edible animal carcasses comprising treating the surface of the animal carcass with an aqueous treatment solution having a pH of 11.5 or greater, said solution containing trialkali metal orthophosphate present in an amount effective to remove, reduce or retard bacterial contamination and/or growth with the proviso that the orthophosphate solution does not contain alcohol.

2. The process of Claim 1 wherein the amount of orthophosphate is 4% of greater based on the weight of the solution.

3. The process as recited in Claim 1 or 2 wherein said animal is poultry, fish or red meat and said orthophosphate is trisodium orthophosphate and the bacterial contamination includes salmonella.

4. The process as recited in any of Claims 1 to 3 wherein said pH ranges from 11.6 to 13.5.

5. The process as recited in any of Claims 1 to 4 wherein residual phosphate is left on the animal to provide reduced bacterial activity on the surface of the animal.

6. The process as recited in Claim 4 wherein said animal is poultry and is treated at a temperature of 0°C to 70°C by a dip or spray of the solution for a period of several seconds to several hours.

7. The process as recited in Claim 6 wherein said poultry is treated at a temperature of 20°C to 70°C.

8. The process as recited in Claim 6 wherein said poultry is treated at a temperature equal to or less than 27°C.

9. The process as recited in Claim 6 wherein said poultry is treated for less than 30 seconds at a temperature equal to or less than 10°C.

10. The process of any of Claims 1 to 5 wherein said animal is fish and crustaceans and wherein the amount of orthophosphate is 4% or greater based on the weight of the solution with the proviso that the treatment solution does not contain ascorbic acid or phosphates other than orthophosphate and phosphates naturally present in the water used to make the treatment solution.

11. The process as recited in Claim 10 wherein the time of treatment is up to 30 minutes.

12. The process of Claim 11 in which seafood spoilage bacteria, Pseudomonas aeruginosa, Bacillus Cereus, Moraxella osbersis are retarded, reduced or removed by treatment with 4% to saturation of a trisodium phosphate solution having a pH exceeding 12.0

13. The process of any of Claims 1 to 5 wherein said animal is a red meat animal and wherein the amount of orthophosphate is 4% or greater based on the weight of the solution and the treatment is effective to retard, reduce or remove bacterial contamination and/or growth without substantial color change caused by the treatment solution pH and with the proviso that the solution does not contain nitrate or nitrite, or ascorbic acid.

14. The process as recited in Claim 13, wherein said orthophosphate is trisodium orthophosphate and the amount of orthophosphate is 4% to saturation.

15. The process as recited in any of the preceding Claims in which the treatment solution pH ranges from 11.6 to 13.5 and the solution is applied pre-rigor.

16. The process as recited in Claim 13 wherein treatment is conducted below 10°C and is followed by conventional processing of the red meat.

17. The process of Claim 13, in which salmonella, campylobacter, listeria and spoilage bacteria are retarded, reduced or removed by treatment with 4% to saturation of trisodium phosphate solution having a pH exceeding 12.0.

18. A process according to Claim 1, wherein the aqueous treatment solution further comprises less than 50% by weight of a basic agent, other than said trialkali metal orthophosphate, based on the combined dry weight of the trialkali metal orthophosphate and the basic agent.

19. A process to Claim 18, wherein said basic agent is sodium hydroxide.

**Patentansprüche**

1. Verfahren zur Behandlung eßbarer tierischer Karkassen, umfassend die Behandlung der Oberfläche der tierischen Karkasse mit einer wäßrigen Behandlungslösung mit einem pH-Wert von 11,5 oder mehr, wobei die Lösung Trialkalimetallorthophosphat in einer Menge enthält, die zur Beseitigung, Verringerung oder Verzögerung von bakterieller Kontamination und/oder von bakteriellem Wachstum geeignet ist, mit der Maßgabe, daß die Orthophosphatlösung keinen Alkohol enthält.

2. Verfahren nach Anspruch 1, wobei die Orthophosphatmenge 4% oder mehr, bezogen auf das Gewicht der Lösung, beträgt.

3. Verfahren nach Anspruch 1 oder 2, wobei es sich bei den Tieren um Geflügel, Fisch oder Tiere mit rotem Fleisch handelt, es sich beim Orthophosphat um Trinatriumorthophosphat handelt und die bakterielle Kontamination Salmonellen einschließt.

4. Verfahren nach einem der Ansprüche 1 bis 3, wobei der pH-Wert im Bereich von 11,6 bis 13,5 liegt.

5. Verfahren nach einem der Ansprüche 1 bis 4, wobei das restliche Phosphat am Tier belassen wird, um eine verringerte bakterielle Aktivität auf der Oberfläche des Tiers zu gewährleisten.

EP 0 516 878 B1

6. Verfahren nach Anspruch 4, wobei es sich bei den Tieren um Geflügel handelt, das bei einer Temperatur von 0°C bis 70°C durch Eintauchen in die Lösung oder durch Besprühen mit der Lösung für eine Zeitspanne von mehreren Sekunden bis mehreren Stunden behandelt wird.

7. Verfahren nach Anspruch 6, wobei das Geflügel bei einer Temperatur von 20 bis 70°C behandelt wird.

8. Verfahren nach Anspruch 6, wobei das Geflügel bei einer Temperatur von 27°C oder darunter behandelt wird.

9. Verfahren nach Anspruch 6, wobei das Geflügel für eine Zeitspanne von weniger als 30 Sekunden bei einer Temperatur von 10°C oder darunter behandelt wird.

10. Verfahren nach einem der Ansprüche 1 bis 5, wobei es sich bei den Tieren um Fische und Krustentiere handelt und wobei die Menge des Orthophosphats 4% oder mehr, bezogen auf das Gewicht der Lösung, beträgt, mit der Maßgabe, daß die Behandlungslösung keine Ascorbinsäure oder Phosphate mit Ausnahme des Orthophosphats und der natürlicherweise in dem zur Herstellung der Behandlungslösung verwendeten Wasser enthaltenen Phosphaten enthält.

11. Verfahren nach Anspruch 10, wobei die Behandlungszeit bis zu 30 Minuten beträgt.

12. Verfahren nach Anspruch 11, wobei die Meeresfrüchte-Fäulnisbakterien Pseudomonas aeruginosa, Bacillus cereus, und Moraxella osbersis durch Behandlung mit einer Trinatriumphosphatlösung mit einer Konzentration von 4% bis zur Sättigung und einem pH-Wert über 12,0 verzögert, verringert oder beseitigt werden.

13. Verfahren nach einem der Ansprüche 1 bis 5, wobei es sich bei den Tieren um Tiere mit rotem Fleisch handelt und wobei die Orthophosphatmenge 4% oder mehr, bezogen auf das Gewicht der Lösung, beträgt und die Behandlung eine Verzögerung, Verringerung oder Beseitigung von bakterieller Kontamination und/oder von bakteriellem Wachstum bewirkt, ohne daß eine wesentliche Farbänderung durch den pH-Wert der Behandlungslösung hervorgerufen wird, mit der Maßgabe, daß die Lösung kein Nitrat oder Nitrit oder Ascorbinsäure enthält.

14. Verfahren nach Anspruch 13, wobei es sich beim Orthophosphat um Trinatriumorthophosphat handelt und die Menge des Orthophosphats im Bereich von 4% bis zur Sättigung liegt.

15. Verfahren nach einem der vorstehenden Ansprüche, wobei der pH-Wert der Behandlungslösung 11,6 bis 13,5 beträgt und die Lösung vor dem Erstarren aufgebracht wird.

16. Verfahren nach Anspruch 13, wobei die Behandlung bei einer Temperatur unter 10°C und gemäß der üblichen Verarbeitung von rotem Fleisch durchgeführt wird.

17. Verfahren nach Anspruch 13, wobei Salmonellen-, Campylobacter-, Listeria- und Fäulnisbakterien durch Behandlung mit einer Trinatriumphosphatlösung mit einer Konzentration von 4% bis zur Sättigung und einem pH-Wert über 12,0 verzögert, verringert oder beseitigt werden.

18. Verfahren nach Anspruch 1, wobei die wäßrige Behandlungslösung ferner weniger als 50 Gew.-% eines basischen Mittels, das von Trialkalimetallorthophosphat abweicht, bezogen auf das Gesamttrockengewicht aus Trialkalimetallorthophosphat und dem basischen Mittel, enthält.

19. Verfahren nach Anspruch 18, wobei es sich beim basischen Mittel um Natriumhydroxid handelt.

**Revendications**

1. Procédé pour traiter des carcasses d'animaux destinées à la consommation humaine, qui consiste à traiter la surface de la carcasse de l'animal avec une solution de traitement aqueuse ayant un pH de 11,5 ou plus, cette solution contenant un orthophosphate de tri(métal alcalin), présent en une quantité suffisante pour éliminer, réduire ou retarder la contamination et/ou la prolifération bactériennes, sous réserve que la solution d'orthophosphate ne contienne pas d'alcool.

2. Procédé selon la revendication 1, dans lequel la quantité de l'orthophosphate est de 4 % ou plus par rapport au poids de la solution.

3. Procédé selon la revendication 1 ou 2, dans lequel ledit animal est une volaille, un poisson ou un animal à viande rouge, et ledit orthophosphate est l'orthophosphate trisodique, la contamination bactérienne comprenant les salmonelles.

4. Procédé selon l'une quelconque des revendications 1 à 3, dans lequel ledit pH est compris entre 11,6 et 13,5.

5. Procédé selon l'une quelconque des revendications 1 à 4, dans lequel le phosphate résiduel est laissé sur l'animal pour réaliser une activité bactérienne réduite sur la surface de l'animal.

6. Procédé selon la revendication 4, dans lequel ledit animal est une volaille, et est traité à une température de 0 à 70°C par une immersion ou une pulvérisation de la solution pendant un temps de plusieurs secondes à plusieurs heures.

7. Procédé selon la revendication 6, dans lequel ladite volaille est traitée à une température de 20 à 70°C.

8. Procédé selon la revendication 6, dans lequel ladite volaille est traitée à une température inférieure ou égale à 27°C.

9. Procédé selon la revendication 6, dans lequel ladite volaille est traitée pendant moins de 30 secondes à une température inférieure ou égale à 10°C.

10. Procédé selon l'une quelconque des revendications 1 à 5, dans lequel ledit animal est un poisson ou un crustacé, et dans lequel la quantité d'orthophosphate est de 4 % ou plus par rapport au poids de la solution, sous réserve que la solution de traitement ne contienne pas d'acide ascorbique ou de phosphates autres qu'un orthophosphate et les phosphates naturels présents dans l'eau utilisée pour préparer la solution de traitement.

11. Procédé selon la revendication 10, dans lequel la durée du traitement peut aller jusqu'à 30 minutes.

12. Procédé selon la revendication 11, dans lequel les bactéries assurant la dégradation des fruits de mer, Pseudomonas aeruginosa, Bacillus cereus, Moraxella osbersis, sont retardées, réduites ou éliminées par traitement avec une concentration comprise entre 4 % et la saturation d'une solution de phosphate trisodique ayant un pH supérieur à 12,0.

13. Procédé selon l'une quelconque des revendications 1 à 5, dans lequel ledit animal est un animal à viande rouge, et dans lequel la quantité d'orthophosphate est de 4 % ou plus, par rapport au poids de la solution, et le traitement est efficace pour retarder, réduire ou supprimer la contamination et/ou la prolifération bactérienne sans un trop fort changement de couleur provoqué par le pH de la solution de traitement, et sous réserve que la solution ne contienne pas de nitrate ou de nitrite, ou d'acide ascorbique.

14. Procédé selon la revendication 13, dans lequel ledit orthophosphate est l'orthophosphate trisodique, et la quantité de l'orthophosphate est comprise entre 4 % et la saturation.

15. Procédé selon l'une quelconque des revendications précédentes, dans lequel le pH de la solution de traitement est compris entre 11,6 et 13,5, et la solution est appliquée avant la rigidité cadavérique.

16. Procédé selon la revendication 13, dans lequel le traitement est conduit au-dessous de 10°C et est suivi par un traitement classique de la viande rouge.

17. Procédé selon la revendication 13, dans lequel les bactéries salmonelles, Campylobacter, Listeria et les bactéries de dégradation, sont retardées, réduites ou éliminées par traitement avec une solution de phosphate trisodique, à une concentration comprise entre 4 % et la saturation, ayant un pH supérieur à 12,0.

**18.** Procédé selon la revendication 1, dans lequel la solution aqueuse de traitement comprend en outre moins de 50 % en poids d'un agent basique autre que ledit orthophosphate de tri(métal alcalin), par rapport au poids sec combiné de l'orthophosphate de tri(métal alcalin) et de l'agent basique.

**19.** Procédé selon la revendication 18, dans lequel ledit agent basique est l'hydroxyde de sodium.